# EUROPEAN PATENT SPECIFICATION

(11) **EP 4 523 907 B1**
(45) Date of publication and mention of the grant of the patent: **04.11.2026**
(21) Application number: 23198087.1
(22) Date of filing: 18.09.2023
(51) Int. Cl.: B32B 27/08, B32B 27/32

(54) **RECYCLABLE MULTILAYER FILMS HAVING A HECO/LDPE-BASED CORE LAYER**
WIEDERVERWERTBARE MEHRSCHICHTIGE FOLIEN MIT EINER KERNSCHICHT AUF HECO/LDPE-BASIS
FILMS MULTICOUCHES RECYCLABLES AYANT UNE COUCHE CENTRALE À BASE DE HECO/LDPE

(43) Date of publication of application: 19.03.2025
(73) Proprietor: Borealis GmbH, 1020 Vienna (AT)
(72) Inventor: ROMANENKO, Yuliia, 4021 Linz (AT); WANG, Jingbo, 4021 Linz (AT); GAHLEITNER, Markus, 4021 Linz (AT); NIEDERSÜß, Peter, 4021 Linz (AT); ORTNER, Stefan, 4021 Linz (AT); SCHÜTZ, Florian, 1020 Vienna (AT); VAN EIJNDHOVEN, Maria, Beringen (BE); BACHTROD, Quang Manfred, 4021 Linz (AT)
(74) Representative: Maiwald GmbH

(56) References cited:
- EP-A1- 3 912 794
- US-A1- 2023 001 674

## Description

### Field of the invention

The present invention relates to a polypropylene-based multilayer film (F) comprising a skin layer, a core layer and a sealing layer, wherein the core layer comprises a HECO having certain properties and an LDPE.

### Background to the Invention

Plastic packaging is widely used in daily life due to a favorable cost/performance ratio. Polyolefins are easy and economical to produce with good properties and are widely used in plastic packaging. Conflicting properties are often required in the packing industry. For example, high stiffness and toughness as well as excellent sealing behavior and good optical properties are required in parallel for plastic films. Different types of polyolefin, for example polypropylene and polyethylene, are routinely combined in blends and/or used in different layers of multilayer films to achieve desired properties. However, use of more than one polymer type, such as combinations of poly(ethylene terephthalate) (PET) or polyamide(s) with polyolefins, complicates the task of recycling the resulting plastic packaging.

One approach to enabling recycling is a 'single material solution', where only one type of polymer material is used. This simplifies recycling of both post-consumer waste and manufacturing waste but limits the range of properties that are available. As such, there is still a need for plastic packaging that may be formed from a single polymer type though comprising various different polymer grades within that polymer type, optimizing the mechanical, optical and sealing properties required for packaging materials, whilst also being straightforward to mechanically recycle with the resultant recyclate also having a good balance of properties

In particular, it is important to be able to access multilayer films having excellent sealing properties at lower temperatures, which helps to reduce manufacturing costs involved in the sealing step, as well as being more sustainable at low temperatures.

The general technical background of the invention also includes EP 3 912 794 A1 and US 2023/001674 A1.

### Summary of the Invention

Therefore, the present invention is directed to a polypropylene-based multilayer film (F), comprising, in the given order, the following layers:
(A) a skin layer, comprising at least 90 wt.-%, based on the total weight of the skin layer, of a polypropylene or mixture of polypropylenes;
(B) a core layer, comprising least 90 wt.-%, based on the total weight of the core layer, of a first polypropylene composition (PC1) comprising the following components:
   a) from 85.0 to 99.0 wt.-%, relative to the total weight of the first polypropylene composition (PC1), of a first heterophasic propylene-ethylene copolymer (HECO1) comprising the following components:
      a1) a crystalline matrix (M1) being either a propylene homopolymer or a propylene-ethylene random copolymer; and
      b1) an amorphous propylene-ethylene elastomer (E1),
      wherein the first heterophasic propylene-ethylene copolymer (HECO1) has the following properties:
         i) a melt flow rate (MFR₂), determined according to ISO 1133 at 230 °C and 2.16 kg, in the range from 0.1 to 20.0 g/10 min;
         ii) a soluble fraction (SF) content in the range from 10 to 45 wt.-% and a crystalline fraction (CF) content in the range from 55 to 90 wt.-%, both determined according to CRYSTEX QC analysis;
         iii) an ethylene content (C2(total)), determined by CRYSTEX QC analysis, in the range from 3.0 to 15.0 wt.-%; and
         iv) a melting temperature (Tm), determined by differential scanning calorimetry (DSC) according to ISO 11357 / part 3 /method C2, in the range from 130 to 155 °C; and
   b) from 1.0 to 15.0 wt.-%, relative to the total weight of the first polypropylene composition (PC1), of a low density polyethylene (LDPE),
   wherein the combined amounts of the first heterophasic propylene-ethylene copolymer (HECO1) and the low density polyethylene (LDPE) are at least 95 wt.-%, relative to the total weight of the first polypropylene composition (PC1); and
(C) a sealing layer, comprising at least 90 wt.-%, based on the total weight of the sealing layer, of a polypropylene or mixture of polypropylenes.

### Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene copolymer is a copolymer of propylene monomer units and comonomer units, preferably selected from ethylene and C₄-C₈ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.

Heterophasic propylene copolymers typically comprise:
a) a crystalline propylene homopolymer or copolymer matrix (M); and
b) an elastomeric rubber, preferably a propylene-ethylene elastomer (E);

The elastomeric rubber component is amorphous, i.e. non-crystalline in nature.

In case of a random-heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a one-phasic propylene copolymer in that it shows two distinct glass transition temperatures Tg which are attributed to the matrix phase and the elastomeric phase.

The present invention will now be described in more detail.

### Detailed Description

The present invention is directed to a polypropylene-based multilayer film (F), comprising, in the given order, the following layers:
(A) a skin layer;
(B) a core layer; and
(C) a sealing layer.

### Core layer

The core layer (B) comprises at least 90 wt.-%, more preferably at least 95 wt.-%, yet more preferably at least 97 wt.-%, based on the total weight of the core layer, of a first polypropylene composition (PC1). Most preferably, the core layer (B) consists of the first polypropylene composition (PC1).

The polypropylene composition (PC1) comprises the following components:
a) from 85.0 to 99.0 wt.-%, relative to the total weight of the first polypropylene composition (PC1), of a first heterophasic propylene-ethylene copolymer (HECO1);
b) from 1.0 to 15.0 wt.-%, relative to the total weight of the first polypropylene composition (PC1), of a low density polyethylene (LDPE).

The combined amounts of the first heterophasic propylene-ethylene copolymer (HECO1) and the low density polyethylene (LDPE) are at least 95 wt.-%, relative to the total weight of the first polypropylene composition (PC1).

More preferably, the polypropylene composition (PC1) comprises the following components:
a) from 90.0 to 98.5.0 wt.-%, relative to the total weight of the first polypropylene composition (PC1), of the first heterophasic propylene-ethylene copolymer (HECO1);
b) from 1.5 to 10.0 wt.-%, relative to the total weight of the first polypropylene composition (PC1), of the low density polyethylene (LDPE).

Most preferably, the polypropylene composition (PC1) comprises the following components:
a) from 92.0 to 98.0 wt.-%, relative to the total weight of the first polypropylene composition (PC1), of the first heterophasic propylene-ethylene copolymer (HECO1);
b) from 2.0 to 8.0 wt.-%, relative to the total weight of the first polypropylene composition (PC1), of the low density polyethylene (LDPE).

If components other than the first heterophasic propylene-ethylene copolymer (HECO1) and the low density polyethylene (LDPE) are present, it is preferred that these are additives.

The skilled practitioner would be able to select suitable additives that are well known in the art.

The additives are preferably selected from pigments, antioxidants, UV-stabilizers, nucleating agents, mold release agents, acid scavengers, lubricants, anti-static agents, and mixtures thereof.

It is understood that the content of additives includes any carrier polymers used to introduce the additives to the polypropylene composition (PC), i.e. masterbatch carrier polymers. An example of such a carrier polymer would be a polypropylene homopolymer in the form of powder.

The individual components will now be described in more detail.

### First heterophasic propylene-ethylene copolymer (HECO1)

The first heterophasic propylene-ethylene copolymer (HECO1) is provided in an amount in the range from 85.0 to 99.0 wt.-%, more preferably in the range from 90.0 to 98.5 wt.-%, most preferably in the range from 92.0 to 98.0 wt.-%, relative to the total weight of the first polypropylene composition (PC1).

The first heterophasic propylene-ethylene copolymer (HECO1) comprises:
a) a crystalline matrix (M1) being either a propylene homopolymer or a propylene-ethylene random copolymer; and
b) an amorphous propylene-ethylene elastomer (E1).

The first heterophasic propylene-ethylene copolymer (HECO1) has a melt flow rate (MFR₂), determined according to ISO 1133 at 230 °C and 2.16 kg, in the range from 0.1 to 20.0 g/10 min, more preferably in the range from 0.3 to 15.0 g/10 min, most preferably in the range from 0.5 to 10.0 g/10 min.

The first heterophasic propylene-ethylene copolymer (HECO1) has a melting temperature (Tm), determined by differential scanning calorimetry (DSC) according to ISO 11357 / part 3 /method C2, in the range from 130 to 170 °C, more preferably in the range from 135 to 167 °C, most preferably in the range from 138 to 165 °C.

The crystalline matrix (M1) of the first heterophasic propylene-ethylene copolymer (HECO1) preferably has a content of 2, 1-regiodefects, as determined by ¹³C-NMR spectroscopy, in the range from 0.00 to 0.20 mol-%, more preferably in the range from 0.00 to 0.10 mol-%, most preferably the crystalline matrix (M1) of the first heterophasic propylene-ethylene copolymer (HECO1) is free from 2,1-regiodefects, as determined by ¹³C-NMR spectroscopy.

Being free of 2,1-regiodefects is an indication that the first heterophasic propylene-ethylene copolymer (HECO1) has been polymerized in the presence of a Ziegler-Natta catalyst.

Therefore, it is further preferred that the first heterophasic propylene-ethylene copolymer (HECO1) has been polymerized in the presence of a Ziegler-Natta catalyst.

The polymeric part of the first heterophasic propylene-ethylene copolymer (HECO1) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data, since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The first heterophasic propylene-ethylene copolymer (HECO1) has a soluble fraction (SF) content, determined according to CRYSTEX QC analysis, in the range from 10 to 45 wt.-%, more preferably in the range from 14 to 35 wt.-%, most preferably in the range from 18 to 28 wt.-%.

The first heterophasic propylene-ethylene copolymer (HECO1) preferably has an ethylene content of the soluble fraction (C2(SF)), determined by CRYSTEX QC analysis, in the range from 17.0 to 60.0 wt.-%, more preferably in the range from 20.0 to 50.0 wt.-%, most preferably in the range from 25.0 to 45.0 wt.-%.

The first heterophasic propylene-ethylene copolymer (HECO 1) preferably has an intrinsic viscosity of the soluble fraction (iV(SF)), determined by CRYSTEX QC analysis, in the range from 1.20 to 3.50 dL/g, more preferably in the range from 1.40 to 3.00 dL/g, most preferably in the range from 1.60 to 2.50 dL/g.

The first heterophasic propylene-ethylene copolymer (HECO1) has a crystalline fraction (CF) content, determined by CRYSTEX QC analysis, in the range from 55 to 90 wt.-%, more preferably in the range from 65 to 86 wt.-%, most preferably in the range from 72 to 82 wt.-%.

The first heterophasic propylene-ethylene copolymer (HECO1) preferably has an ethylene content of the crystalline fraction (C2(CF)), determined by CRYSTEX QC analysis, in the range from 1.0 to 10.0 wt.-%, more preferably in the range from 1.5 to 7.0 wt.-%, most preferably in the range from 2.0 to 5.0 wt.-%.

The first heterophasic propylene-ethylene copolymer (HECO1) preferably has an intrinsic viscosity of the crystalline fraction (iV(CF)), determined by CRYSTEX QC analysis, in the range from 1.20 to 4.50 dL/g, more preferably in the range from 1.60 to 4.00 dL/g, most preferably in the range from 1.80 to 3.50 dL/g.

It is also preferred that the ratio of the intrinsic viscosity of the soluble and crystalline fractions, (iV(SF)/iV(CF)), determined by CRYSTEX QC analysis, is in the range from 0.40 to 2.00, more preferably in the range from 0.50 to 1.50, most preferably in the range from 0.60 to 1.10.

The first heterophasic propylene-ethylene copolymer (HECO1) has an ethylene content (C2(total)), determined by CRYSTEX QC analysis, in the range from 3.0 to 15.0 wt.-%, more preferably in the range from 5.0 to 13.0 wt.-%, most preferably in the range from 7.0 to 11.0 wt.-%.

The first heterophasic propylene-ethylene copolymer (HECO1) preferably has a flexural modulus, determined according to ISO 178 on 80×10×4 mm³ injection-molded specimens prepared according to ISO 19069-2, in the range from 100 to 700 MPa, more preferably in the range from 200 to 650 MPa, most preferably in the range from 300 to 600 MPa.

In the broadest sense, the crystalline matrix (M1) can be either a propylene homopolymer of a propylene-ethylene random copolymer. It is, however, preferred that the crystalline matrix (M1) is a propylene-ethylene random copolymer meaning that the first heterophasic propylene-ethylene copolymer (HECO1) is a first random-heterophasic propylene-ethylene copolymer (RAHECO1).

The first random-heterophasic propylene-ethylene copolymer (RAHECO1) preferably has a melt flow rate (MFR₂), determined according to ISO 1133 at 230 °C and 2.16 kg, in the range from 0.1 to 10.0 g/10 min, more preferably in the range from 0.3 to 9.0 g/10 min, most preferably in the range from 0.5 to 8.0 g/10 min.

The first random-heterophasic propylene-ethylene copolymer (RAHECO1) preferably has a melting temperature (Tm), determined by differential scanning calorimetry (DSC) according to ISO 11357 / part 3 /method C2, in the range from 130 to 155 °C, more preferably in the range from 135 to 150 °C, most preferably in the range from 138 to 145 °C.

The crystalline matrix (M1) of the first random-heterophasic propylene-ethylene copolymer (RAHECO1) preferably has a content of 2,1-regiodefects, as determined by ¹³C-NMR spectroscopy, in the range from 0.00 to 0.20 mol-%, more preferably in the range from 0.00 to 0.10 mol-%, most preferably the crystalline matrix (M1) of the first random-heterophasic propylene-ethylene copolymer (RAHECO1) is free from 2,1-regiodefects, as determined by ¹³C-NMR spectroscopy.

Being free of 2,1-regiodefects is an indication that the first random-heterophasic propylene-ethylene copolymer (RAHECO1) has been polymerized in the presence of a Ziegler-Natta catalyst.

Therefore, it is further preferred that the first random-heterophasic propylene-ethylene copolymer (RAHECO1) has been polymerized in the presence of a Ziegler-Natta catalyst.

The first random-heterophasic propylene-ethylene copolymer (RAHECO1) preferably has a soluble fraction (SF) content, determined according to CRYSTEX QC analysis, in the range from 15 to 45 wt.-%, more preferably in the range from 17 to 35 wt.-%, most preferably in the range from 18 to 28 wt.-%.

The first random-heterophasic propylene-ethylene copolymer (RAHECO1) preferably has an ethylene content of the soluble fraction (C2(SF)), determined by CRYSTEX QC analysis, in the range from 17.0 to 45.0 wt.-%, more preferably in the range from 20.0 to 40.0 wt.-%, most preferably in the range from 25.0 to 35.0 wt.-%.

The first random-heterophasic propylene-ethylene copolymer (RAHECO1) preferably has an intrinsic viscosity of the soluble fraction (iV(SF)), determined by CRYSTEX QC analysis, in the range from 1.20 to 3.50 dL/g, more preferably in the range from 1.40 to 3.00 dL/g, most preferably in the range from 1.60 to 2.50 dL/g.

The first random-heterophasic propylene-ethylene copolymer (RAHECO1) preferably has a crystalline fraction (CF) content, determined by CRYSTEX QC analysis, in the range from 55 to 85 wt.-%, more preferably in the range from 65 to 83 wt.-%, most preferably in the range from 72 to 82 wt.-%.

The first random-heterophasic propylene-ethylene copolymer (RAHECO1) preferably has an ethylene content of the crystalline fraction (C2(CF)), determined by CRYSTEX QC analysis, in the range from 1.0 to 10.0 wt.-%, more preferably in the range from 1.5 to 7.0 wt.-%, most preferably in the range from 2.0 to 5.0 wt.-%.

The first random-heterophasic propylene-ethylene copolymer (RAHECO1) preferably has an intrinsic viscosity of the crystalline fraction (iV(CF)), determined by CRYSTEX QC analysis, in the range from 1.20 to 4.50 dL/g, more preferably in the range from 1.60 to 4.00 dL/g, most preferably in the range from 2.00 to 3.50 dL/g.

It is also preferred that the ratio of the intrinsic viscosity of the soluble and crystalline fractions, (iV(SF)/iV(CF)), determined by CRYSTEX QC analysis, is in the range from 0.40 to 2.00, more preferably in the range from 0.50 to 1.50, most preferably in the range from 0.60 to 1.10.

The first random-heterophasic propylene-ethylene copolymer (RAHECO1) preferably has an ethylene content (C2(total)), determined by CRYSTEX QC analysis, in the range from 3.0 to 15.0 wt.-%, more preferably in the range from 5.0 to 13.0 wt.-%, most preferably in the range from 7.0 to 11.0 wt.-%.

The first random-heterophasic propylene-ethylene copolymer (RAHECO1) preferably has a flexural modulus, determined according to ISO 178 on 80×10×4 mm³ injection-molded specimens prepared according to ISO 19069-2, in the range from 100 to 700 MPa, more preferably in the range from 200 to 650 MPa, most preferably in the range from 300 to 600 MPa.

### Low density polyethylene (LDPE)

The low density polyethylene (LDPE) is provided in an amount in the range from 1.0 to 15.0 wt.-%, more preferably in the range from 1.5 to 10.0 wt.-%, most preferably in the range from 2.0 to 8.0 wt.-%, relative to the total weight of the first polypropylene composition (PC1).

As would be clear to the skilled person, the term "low density polyethylene" refers not to all polyethylenes having a certain density, but rather to polyethylenes prepared by a radical polymerization process. This term is well-known in the art and the person skilled in the art would be able to easily distinguish an LDPE from an HDPE (high density polyethylene) or an LLDPE (linear low density polyethylene).

The low density polyethylene (LDPE) is preferably an ethylene homopolymer, meaning that it does not contain any comonomers. It is equally preferably characterized by a long-chain branched structure.

The low density polyethylene (LDPE) preferably has a melt flow rate (MFR₂), determined according to ISO 1133 at 190 °C and 2.16 kg, in the range from 0.1 to 20.0 g/10 min, more preferably in the range from 0.3 to 10.0 g/10 min, most preferably in the range from 0.5 to 7.0 g/10 min.

The low density polyethylene (LDPE) preferably has a density, determined according to ISO 1183, in the range from 910 to 930 kg/m³, more preferably in the range from 913 to 928 kg/m³, yet more preferably in the range from 916 to 926 kg/m³, most preferably in the range from 918 to 925 kg/m³.

The low density polyethylene (LDPE) preferably has a melting temperature (Tm), determined by differential scanning calorimetry (DSC) according to ISO 11357 / part 3 /method C2, in the range from 100 to 130 °C, more preferably in the range from 105 to 125 °C, yet more preferably in the range from 107 to 120 °C, most preferably in the range from 108 to 118 °C.

### Sealing layer

The sealing layer (C) comprises at least 90 wt.-%, more preferably at least 95 wt.-%, most preferably at least 97 wt.-%, based on the total weight of the sealing layer, of a polypropylene or mixture of polypropylenes.

It is preferred that the sealing layer (C) of the present invention comprises at least 90 wt.-% of a second polypropylene composition (PC2), more preferably at least 95 wt.-% of the second polypropylene composition (PC2), yet more preferably at least 97 wt.-% of the second polypropylene composition (PC2), most preferably the sealing layer (C) consists of the second polypropylene composition (PC2).

The second polypropylene composition (PC2) comprises the following components:
i) a second random-heterophasic propylene-ethylene copolymer (RAHECO2); and
ii) one or more propylene-ethylene random copolymers (R-PP).

More preferably, the second polypropylene composition (PC2) comprises:
i) 20 to 70 wt.-%, more preferably 25 to 60 wt.-%, most preferably 30 to 50 wt.-%, based on the total weight of the polypropylene composition (PC), of the second random-heterophasic propylene-ethylene copolymer (RAHECO2);
ii) 30 to 80 wt.-%, more preferably 40 to 75 wt.-%, most preferably 50 to 70 wt.-%, based on the total weight of the polypropylene composition (PC), of the one or more propylene-ethylene random copolymers (R-PP).

In one embodiment, the second polypropylene composition (PC2) comprises the following components:
i) the second random-heterophasic propylene-ethylene copolymer (RAHECO2);
ii) a first propylene-ethylene random copolymer (R-PP1); and
iii) a second propylene-ethylene random copolymer (R-PP2).

In said embodiment, the combined amounts of the second random-heterophasic propylene-ethylene copolymer (RAHECO2), the first propylene-ethylene random copolymer (R-PP1) and the second propylene-ethylene random copolymer (R-PP2) are at least 90 wt.-%, more preferably at least 95 wt.-%, even more preferably at least 97 wt.-%, relative to the total weight of the polypropylene composition (PC).

Preferably the second polypropylene composition (PC2) comprises the following components:
i) 20 to 70 wt.-%, based on the total weight of the second polypropylene composition (PC2), of the second random-heterophasic propylene-ethylene copolymer (RAHECO2);
ii) 10 to 50 wt.-%, based on the total weight of the second polypropylene composition (PC2), of the first propylene-ethylene random copolymer (R-PP1); and
iii) 10 to 50 wt.-%, based on the total weight of the second polypropylene composition (PC2), of a second propylene-ethylene random copolymer (R-PP2).

More preferably, the second polypropylene composition (PC2) comprises the following components:
i) 25 to 60 wt.-%, based on the total weight of the second polypropylene composition (PC2), of the second random-heterophasic propylene-ethylene copolymer (RAHECO2);
ii) 12 to 48 wt.-%, based on the total weight of the second polypropylene composition (PC2), of the first propylene-ethylene random copolymer (R-PP1); and
iii) 12 to 48 wt.-%, based on the total weight of the second polypropylene composition (PC2), of a second propylene-ethylene random copolymer (R-PP2).

Most preferably, the second polypropylene composition (PC2) comprises the following components:
i) 30 to 50 wt.-%, based on the total weight of the second polypropylene composition (PC2), of the second random-heterophasic propylene-ethylene copolymer (RAHECO2);
ii) 15 to 45 wt.-%, based on the total weight of the second polypropylene composition (PC2), of the first propylene-ethylene random copolymer (R-PP1); and
iii) 15 to 45 wt.-%, based on the total weight of the second polypropylene composition (PC2), of the second propylene-ethylene random copolymer (R-PP2).

The amount of the first propylene-ethylene random copolymer (R-PP1) and the amount of the second propylene-ethylene random copolymer (R-PP2) may be the same or different

If components other than the second random-heterophasic propylene-ethylene copolymer (RAHECO2), the first propylene-ethylene random copolymer (R-PP1), and the second propylene-ethylene random copolymer (R-PP2) are present, it is preferred that these are additives.

The skilled practitioner would be able to select suitable additives that are well known in the art.

The additives are preferably selected from pigments, antioxidants, UV-stabilizers, nucleating agents, mold release agents, acid scavengers, lubricants, anti-static agents, and mixtures thereof.

It is understood that the content of additives includes any carrier polymers used to introduce the additives to the polypropylene composition (PC), i.e. masterbatch carrier polymers. An example of such a carrier polymer would be a polypropylene homopolymer in the form of powder.

The individual components will now be described in more detail.

### The second random-heterophasic propylene-ethylene copolymer (RAHECO2)

The second random-heterophasic propylene-ethylene copolymer (RAHECO2) is preferably provided in an amount in the range from 20.0 to 70.0 wt.-%, more preferably in the range from 25.0 to 60.0 wt.-%, most preferably in the range from 30.0 to 50.0 wt.-%, relative to the total weight of the second polypropylene composition (PC2).

The second random-heterophasic propylene-ethylene copolymer (RAHECO2) comprises:
a) a crystalline matrix (M2) being a propylene-ethylene random copolymer; and
b) an amorphous propylene-ethylene elastomer (E2).

The second random-heterophasic propylene-ethylene copolymer (RAHECO2) preferably has a melt flow rate (MFR₂), determined according to ISO 1133 at 230 °C and 2.16 kg, in the range from 0.1 to 10.0 g/10 min, more preferably in the range from 0.3 to 9.0 g/10 min, most preferably in the range from 0.5 to 8.0 g/10 min.

The second random-heterophasic propylene-ethylene copolymer (RAHECO2) preferably has a melting temperature (Tm), determined by differential scanning calorimetry (DSC) according to ISO 11357 / part 3 /method C2, in the range from 130 to 155 °C, more preferably in the range from 134 to 150 °C, most preferably in the range from 138 to 148 °C.

The crystalline matrix (M2) of the second random-heterophasic propylene-ethylene copolymer (RAHECO2) preferably has a content of 2,1-regiodefects, as determined by ¹³C-NMR spectroscopy, in the range from 0.00 to 0.20 mol-%, more preferably in the range from 0.00 to 0.10 mol-%, most preferably the crystalline matrix (M2) of the second random-heterophasic propylene-ethylene copolymer (RAHECO2) is free from 2,1-regiodefects, as determined by ¹³C-NMR spectroscopy.

Being free of 2,1-regiodefects is an indication that the second random-heterophasic propylene-ethylene copolymer (RAHECO2) has been polymerized in the presence of a Ziegler-Natta catalyst.

Therefore, it is further preferred that the second random-heterophasic propylene-ethylene copolymer (RAHECO2) has been polymerized in the presence of a Ziegler-Natta catalyst.

The second random-heterophasic propylene-ethylene copolymer (RAHECO2) preferably has a soluble fraction (SF) content, determined according to CRYSTEX QC analysis, in the range from 15 to 45 wt.-%, more preferably in the range from 17 to 35 wt.-%, most preferably in the range from 18 to 28 wt.-%.

The second random-heterophasic propylene-ethylene copolymer (RAHECO2) preferably has an ethylene content of the soluble fraction (C2(SF)), determined by CRYSTEX QC analysis, in the range from 17.0 to 45.0 wt.-%, more preferably in the range from 20.0 to 40.0 wt.-%, most preferably in the range from 25.0 to 35.0 wt.-%.

The second random-heterophasic propylene-ethylene copolymer (RAHECO2) preferably has an intrinsic viscosity of the soluble fraction (iV(SF)), determined by CRYSTEX QC analysis, in the range from 1.20 to 3.50 dL/g, more preferably in the range from 1.40 to 3.00 dL/g, most preferably in the range from 1.60 to 2.50 dL/g.

The second random-heterophasic propylene-ethylene copolymer (RAHECO2) preferably has a crystalline fraction (CF) content, determined by CRYSTEX QC analysis, in the range from 55 to 85 wt.-%, more preferably in the range from 65 to 83 wt.-%, most preferably in the range from 72 to 82 wt.-%.

The second random-heterophasic propylene-ethylene copolymer (RAHECO2) preferably has an ethylene content of the crystalline fraction (C2(CF)), determined by CRYSTEX QC analysis, in the range from 1.0 to 10.0 wt.-%, more preferably in the range from 1.5 to 7.0 wt.-%, most preferably in the range from 2.0 to 5.0 wt.-%.

The second random-heterophasic propylene-ethylene copolymer (RAHECO2) preferably has an intrinsic viscosity of the crystalline fraction (iV(CF)), determined by CRYSTEX QC analysis, in the range from 1.20 to 4.50 dL/g, more preferably in the range from 1.60 to 4.00 dL/g, most preferably in the range from 1.80 to 3.50 dL/g.

It is also preferred that the ratio of the intrinsic viscosity of the soluble and crystalline fractions, (iV(SF)/iV(CF)), determined by CRYSTEX QC analysis, is in the range from 0.40 to 2.00, more preferably in the range from 0.50 to 1.50, most preferably in the range from 0.60 to 1.10.

The second random-heterophasic propylene-ethylene copolymer (RAHECO2) preferably has an ethylene content (C2(total)), determined by CRYSTEX QC analysis, in the range from 3.0 to 15.0 wt.-%, more preferably in the range from 5.0 to 13.0 wt.-%, most preferably in the range from 7.0 to 11.0 wt.-%.

The second random-heterophasic propylene-ethylene copolymer (RAHECO2) preferably has a flexural modulus, determined according to ISO 178 on 80×10×4 mm³ injection-molded specimens prepared according to ISO 19069-2, in the range from 100 to 700 MPa, more preferably in the range from 200 to 650 MPa, most preferably in the range from 300 to 600 MPa.

In one particularly preferred embodiment, the first heterophasic propylene-ethylene copolymer (HECO1) is a first random-heterophasic propylene-ethylene copolymer (RAHECO1) wherein the crystalline matrix (M1) is a propylene-ethylene random copolymer and the second random-heterophasic propylene-ethylene copolymer (RAHECO2) is the same as the first random-heterophasic propylene-ethylene copolymer (RAHECO1).

### First propylene-ethylene random copolymer (R-PP1)

The first propylene-ethylene random copolymer (R-PP1) is preferably present in the second polypropylene composition (PC2) in an amount in the range from 10.0 to 50.0 wt.-%, more preferably from 12.0 to 48.0 wt.-%, most preferably from 15.0 to 45.0 wt.-%, relative to the total weight of the second polypropylene composition (PC2).

As would be understood by the person skilled in the art, in contrast to the (random-)heterophasic propylene-ethylene copolymers, the first propylene-ethylene random copolymer (R-PP1) is monophasic.

The first propylene-ethylene random copolymer (R-PP1) is a random copolymer with propylene monomer units and ethylene comonomer units.

The first propylene-ethylene random copolymer (R-PP1) preferably has a melt flow rate (MFR₂), determined according to ISO 1133 at 230 °C and 2.16 kg, in the range from 1.0 to 5.0 g/10 min, more preferably in the range from 1.1 to 4.5 g/10 min, most preferably in the range from 1.2 to 4.0 g/10 min.

The first propylene-ethylene random copolymer (R-PP1) preferably has an ethylene content (C2), determined by quantitative ¹³C-NMR spectroscopy, in the range from 1.0 to 10.0 wt.-%, more preferably in the range from 2.0 to 8.0 wt.-%, most preferably in the range from 3.0 to 6.0 wt.-%.

The first propylene-ethylene random copolymer (R-PP1) preferably has a xylene cold soluble (XCS) content, determined according to ISO 16152, in the range from 1.0 to 15.0 wt.-%, more preferably in the range from 3.0 to 12.0 wt.-%, most preferably in the range from 5.0 to 10.0 wt.-%.

The first propylene-ethylene random copolymer (R-PP1) preferably has a melting temperature (Tm), determined by differential scanning calorimetry (DSC) according to ISO 11357 / part 3 /method C2, in the range from 130 to 150 °C, more preferably in the range from 135 to 149 °C, most preferably in the range from 144 to 147 °C.

The first propylene-ethylene random copolymer (R-PP1) preferably has a crystallization temperature (Tc), determined by differential scanning calorimetry (DSC) according to ISO 11357 / part 3 /method C2, in the range from 110 to 125 °C, more preferably in the range from 112 to 122 °C, most preferably in the range from 114 to 119 °C.

The first propylene-ethylene random copolymer (R-PP1) has a content of 2,1-regiodefects, as determined by ¹³C-NMR spectroscopy, in the range from 0.00 to 0.20 mol-%, more preferably in the range from 0.00 to 0.10 mol-%, most preferably the first propylene-ethylene random copolymer (R-PP1) is free from 2,1-regiodefects, as determined by ¹³C-NMR spectroscopy.

Being free of 2,1-regiodefects is an indication that the first propylene-ethylene random copolymer (R-PP1) has been polymerized in the presence of a Ziegler-Natta catalyst.

Therefore, it is further preferred that the first propylene-ethylene random copolymer (R-PP1) has been polymerized in the presence of a Ziegler-Natta catalyst.

The first propylene-ethylene random copolymer (R-PP1) preferably has a flexural modulus, determined according to ISO 178 on 80×10×4 mm³ injection-molded specimens prepared according to ISO 19069-2, in the range from 700 to 1600 MPa, more preferably in the range from 750 to 1550 MPa, most preferably in the range from 800 to 1500 MPa.

### Second propylene-ethylene random copolymer (R-PP2)

The second propylene-ethylene random copolymer (R-PP2) is preferably present in the second polypropylene composition (PC2) in an amount in the range from 10.0 to 50.0 wt.-%, more preferably from 12.0 to 48.0 wt.-%, most preferably from 15.0 to 45.0 wt.-%, relative to the total weight of the second polypropylene composition (PC2).

As would be understood by the person skilled in the art, in contrast to the (random-)heterophasic propylene-ethylene copolymers, the second propylene-ethylene random copolymer (R-PP2) is monophasic.

The second propylene-ethylene random copolymer (R-PP2) is a random copolymer with propylene monomer units and ethylene comonomer units.

The second propylene-ethylene random copolymer (R-PP2) preferably has a melt flow rate (MFR₂), determined according to ISO 1133 at 230 °C and 2.16 kg, in the range from 5.5 to 20.0 g/10 min, more preferably in the range from 7.0 to 17.0 g/10 min, most preferably in the range from 8.0 to 15.0 g/10 min.

The second propylene-ethylene random copolymer (R-PP2) preferably has an ethylene content (C2), determined by quantitative ¹³C-NMR spectroscopy, in the range from 1.0 to 10.0 wt.-%, more preferably in the range from 2.0 to 8.0 wt.-%, most preferably in the range from 3.0 to 6.0 wt.-%.

The second propylene-ethylene random copolymer (R-PP2) preferably has a xylene cold soluble (XCS) content, determined according to ISO 16152, in the range from 1.0 to 15.0 wt.-%, more preferably in the range from 3.0 to 12.0 wt.-%, most preferably in the range from 5.0 to 10.0 wt.-%.

The second propylene-ethylene random copolymer (R-PP2) preferably has a melting temperature (Tm), determined by differential scanning calorimetry (DSC) according to ISO 11357 / part 3 /method C2, in the range from 130 to 150 °C, more preferably in the range from 132 to 146 °C, most preferably in the range from 138 to 142 °C.

The second propylene-ethylene random copolymer (R-PP2) preferably has a crystallization temperature (Tc), determined by differential scanning calorimetry (DSC) according to ISO 11357 / part 3 /method C2, in the range from 85 to 109 °C, more preferably in the range from 90 to 105 °C, most preferably in the range from 95 to 100 °C.

The second propylene-ethylene random copolymer (R-PP2) has a content of 2,1-regiodefects, as determined by ¹³C-NMR spectroscopy, in the range from 0.00 to 0.20 mol-%, more preferably in the range from 0.00 to 0.10 mol-%, most preferably the second propylene-ethylene random copolymer (R-PP2) is free from 2,1-regiodefects, as determined by ¹³C-NMR spectroscopy.

Being free of 2,1-regiodefects is an indication that the second propylene-ethylene random copolymer (R-PP2) has been polymerized in the presence of a Ziegler-Natta catalyst.

Therefore, it is further preferred that the second propylene-ethylene random copolymer (R-PP2) has been polymerized in the presence of a Ziegler-Natta catalyst.

The second propylene-ethylene random copolymer (R-PP2) preferably has a flexural modulus, determined according to ISO 178 on 80×10×4 mm³ injection-molded specimens prepared according to ISO 19069-2, in the range from 300 to 1000 MPa, more preferably in the range from 350 to 950 MPa, most preferably in the range from 400 to 900 MPa.

### Skin layer

The skin layer (A) comprises at least 90 wt.-%, more preferably at least 95 wt.-%, most preferably at least 97 wt.-%, based on the total weight of the skin layer, of a polypropylene or mixture of polypropylenes.

It is preferred that the skin layer (A) comprises at least 90 wt.-%, more preferably at least 95 wt.-%, most preferably at least 97 wt.-%, based on the total weight of the skin layer, of a third propylene-ethylene random copolymer (R-PP3).

As would be understood by the person skilled in the art, in contrast to the (random-)heterophasic propylene-ethylene copolymers, the third propylene-ethylene random copolymer (R-PP3) is monophasic.

The third propylene-ethylene random copolymer (R-PP3) is a random copolymer with propylene monomer units and ethylene comonomer units.

The third propylene-ethylene random copolymer (R-PP3) preferably has a melt flow rate (MFR₂), determined according to ISO 1133 at 230 °C and 2.16 kg, in the range from 1.0 to 10.0 g/10 min, more preferably in the range from 1.3 to 5.0 g/10 min, most preferably in the range from 1.5 to 3.0 g/10 min.

The third propylene-ethylene random copolymer (R-PP3) preferably has an ethylene content (C2), determined by quantitative ¹³C-NMR spectroscopy, in the range from 1.0 to 10.0 wt.-%, more preferably in the range from 2.0 to 8.0 wt.-%, most preferably in the range from 3.0 to 6.0 wt.-%.

The third propylene-ethylene random copolymer (R-PP3) preferably has a xylene cold soluble (XCS) content, determined according to ISO 16152, in the range from 1.0 to 15.0 wt.-%, more preferably in the range from 3.0 to 12.0 wt.-%, most preferably in the range from 5.0 to 10.0 wt.-%.

The third propylene-ethylene random copolymer (R-PP3) preferably has a melting temperature (Tm), determined by differential scanning calorimetry (DSC) according to ISO 11357 / part 3 /method C2, in the range from 130 to 150 °C, more preferably in the range from 132 to 146 °C, most preferably in the range from 138 to 142 °C.

The third propylene-ethylene random copolymer (R-PP3) preferably has a crystallization temperature (Tc), determined by differential scanning calorimetry (DSC) according to ISO 11357 / part 3 /method C2, in the range from 85 to 105 °C, more preferably in the range from 90 to 100 °C, most preferably in the range from 93 to 97 °C.

The third propylene-ethylene random copolymer (R-PP3) preferably has a content of 2,1-regiodefects, as determined by ¹³C-NMR spectroscopy, in the range from 0.00 to 0.20 mol-%, more preferably in the range from 0.00 to 0.10 mol-%, most preferably the third propylene-ethylene random copolymer (R-PP3) is free from 2,1-regiodefects, as determined by ¹³C-NMR spectroscopy.

Being free of 2,1-regiodefects is an indication that the third propylene-ethylene random copolymer (R-PP3) has been polymerized in the presence of a Ziegler-Natta catalyst.

Therefore, it is further preferred that the third propylene-ethylene random copolymer (R-PP3) has been polymerized in the presence of a Ziegler-Natta catalyst.

The third propylene-ethylene random copolymer (R-PP3) preferably has a flexural modulus, determined according to ISO 178 on 80×10×4 mm³ injection-molded specimens prepared according to ISO 19069-2, in the range from 500 to 1100 MPa, more preferably in the range from 550 to 1000 MPa, most preferably in the range from 600 to 900 MPa.

The skin layer (A) preferably further comprises an amount in the range from 1 to 10 wt.-%, more preferably in the range from 2.5 to 7.5 wt.-%, most preferably in the range from 4.0 to 6.0 wt.-%, relative to the total weight of the skin layer of a polar modified polypropylene (PMP).

The polar modified polypropylene is preferably a maleic anhydride-grafted polypropylene (MAH-PP).

The maleic anhydride-grafted polypropylene (MAH-PP) preferably has a melt flow rate (MFR₂), determined according to ISO 1133 at 190 °C and 2.16 kg, in the range from 50 to 250 g/10 min, more preferably in the range from 60 to 220 g/10 min, most preferably in the range from 70 to 200 g/10 min.

The maleic anhydride-grafted polypropylene (MAH-PP) preferably has a content of maleic anhydride (MAH), determined by FTIR spectroscopy, in the range from 0.1 to 5.0 wt.-%, more preferably in the range from 0.5 to 3.0 wt.-%, most preferably in the range from 1.0 to 2.0 wt.-%.

### Multilayer film

As described above, the polypropylene-based multilayer film (F) comprises, in the given order, the following layers:
(A) a skin layer;
(B) a core layer; and
(C) a sealing layer.

Although other layers may be present, it is preferred that any further layers, if present, are between the skin layer (A) and the core layer (B) or between the core layer (B) and between the sealing layer (C), most preferably between the skin layer (A) and the core layer (B).

It is particularly preferred that no further layers are present, i.e. that the polypropylene-based multilayer film (F) is a 3-layer film, consisting of layers (A), (B) and (C).

It is preferred that the polypropylene-based multilayer film (F) has a thickness in the range from 20 to 250 µm, more preferably 40 to 200 µm, most preferably 50 to 150 µm.

It is preferred that:
a) the skin layer has a thickness in the range from 8 to 30% of the total thickness of the polypropylene-based multilayer film (F);
b) the core layer has a thickness in the range from 40 to 84% of the total thickness of the polypropylene-based multilayer film (F); and
c) the sealing layer has a thickness in the range from 8 to 30% of the total thickness of the polypropylene-based multilayer film (F).

It is further preferred that:
a) the skin layer has a thickness in the range from 10 to 25% of the total thickness of the polypropylene-based multilayer film (F);
b) the core layer has a thickness in the range from 50 to 80% of the total thickness of the polypropylene-based multilayer film (F); and
c) the sealing layer has a thickness in the range from 10 to 25% of the total thickness of the polypropylene-based multilayer film (F).

It is particularly preferred that:
a) the skin layer has a thickness in the range from 12 to 20% of the total thickness of the polypropylene-based multilayer film (F);
b) the core layer has a thickness in the range from 60 to 76% of the total thickness of the polypropylene-based multilayer film (F); and
c) the sealing layer has a thickness in the range from 12 to 20% of the total thickness of the polypropylene-based multilayer film (F).

It is preferred that the polypropylene-based multilayer film (F) has a melting temperature (Tₘ), determined by differential scanning calorimetry (DSC) according to ISO 11357 / part 3 /method C2, in the range from 130 to 155 °C, more preferably in the range from 135 to 150 °C, most preferably in the range from 138 to 148 °C.

It is preferred that the polypropylene-based multilayer film (F) has an associated melting enthalpy (Hₘ), determined by differential scanning calorimetry (DSC) according to ISO 11357 / part 3 /method C2, in the range from 55 to 85 J/g, more preferably in the range from 58 to 82 J/g, most preferably in the range from 60 to 79 J/g.

It is preferred that the polypropylene-based multilayer film (F) has a crystallization temperature (T_{c}), determined by differential scanning calorimetry (DSC) according to ISO 11357 / part 3 /method C2, in the range from 95 to 110 °C, more preferably in the range from 96 to 107 °C, most preferably in the range from 97 to 104 °C.

It is preferred that the polypropylene-based multilayer film (F) has an associated crystallization enthalpy (H_{c}), determined by differential scanning calorimetry (DSC) according to ISO 11357 / part 3 /method C2, in the range from 50 to 85 J/g, more preferably in the range from 55 to 82 J/g, most preferably in the range from 60 to 79 J/g.

It is preferred that the polypropylene-based multilayer film (F) has a seal strength in the machine direction, determined according to the method specified in the measurement methods at a sealing temperature of 120 °C, in the range from 6 to 30 N, more preferably in the range from 8 to 26 N, most preferably in the range from 10 to 24 N.

It is preferred that the polypropylene-based multilayer film (F) has a seal strength in the machine direction, determined according to the method specified in the measurement methods at a sealing temperature of 125 °C, in the range from 15 to 50 N, more preferably in the range from 18 to 40 N, most preferably in the range from 20 to 30 N.

It is preferred that the polypropylene-based multilayer film (F) has a seal strength in the machine direction, determined according to the method specified in the measurement methods at a sealing temperature of 130 °C, in the range from 20 to 50 N, more preferably in the range from 23 to 40 N, most preferably in the range from 25 to 35 N.

It is preferred that the polypropylene-based multilayer film (F) has a seal strength in the machine direction, determined according to the method specified in the measurement methods at a sealing temperature of 140 °C, in the range from 20 to 60 N, more preferably in the range from 25 to 50 N, most preferably in the range from 30 to 40 N.

It is preferred that the polypropylene-based multilayer film (F) has a seal strength in the machine direction, determined according to the method specified in the measurement methods at a sealing temperature of 150 °C, in the range from 20 to 60 N, more preferably in the range from 25 to 50 N, most preferably in the range from 30 to 40 N.

It is preferred that the polypropylene-based multilayer film (F) has a seal strength in the transverse direction, determined according to the method specified in the measurement methods at a sealing temperature of 120 °C, in the range from 12 to 30 N, more preferably in the range from 13 to 26 N, most preferably in the range from 15 to 24 N.

It is preferred that the polypropylene-based multilayer film (F) has a seal strength in the transverse direction, determined according to the method specified in the measurement methods at a sealing temperature of 125 °C, in the range from 13 to 40 N, more preferably in the range from 15 to 35 N, most preferably in the range from 17 to 30 N.

It is preferred that the polypropylene-based multilayer film (F) has a seal strength in the transverse direction, determined according to the method specified in the measurement methods at a sealing temperature of 130 °C, in the range from 13 to 40 N, more preferably in the range from 15 to 35 N, most preferably in the range from 17 to 30 N.

It is preferred that the polypropylene-based multilayer film (F) has a seal strength in the transverse direction, determined according to the method specified in the measurement methods at a sealing temperature of 140 °C, in the range from 13 to 40 N, more preferably in the range from 15 to 35 N, most preferably in the range from 17 to 30 N.

It is preferred that the polypropylene-based multilayer film (F) has a seal strength in the transverse direction, determined according to the method specified in the measurement methods at a sealing temperature of 150 °C, in the range from 13 to 40 N, more preferably in the range from 15 to 35 N, most preferably in the range from 17 to 30 N.

### EXAMPLES

### 1. Measurement methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the ethylene-propylene copolymer.

Quantitative ¹³C{¹H} NMR spectra were recorded in the solution-state using a Bruker Advance III 400 NMR spectrometer operating at 400.15 and 100.62 MHz for ¹H and ¹³C respectively. All spectra were recorded using a ¹³C optimised 10 mm extended temperature probe head at 125°C using nitrogen gas for all pneumatics.

Approximately 200 mg of material was dissolved in *1,2*-tetrachloroethane-*d*₂ (TCE-*d₂*). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative ¹³C{¹H} NMR spectra were processed, integrated and relevant quantitative properties determined from the integrals using proprietary computer programs.

All chemical shifts are internally referenced to the methyl isotactic pentad (mmmm) at 21.85 ppm. Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences: $\left[mmmm\right] % = 100 * \left(mmmm/sum of all pentads\right)$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm: ${P}_{21 e} = \left({I}_{e 6}+{I}_{e 8}\right) / 2$

The amount of 1,2 primary inserted propene was quantified based on the methyl region with correction undertaken for sites included in this region not related to primary insertion and for primary insertion sites excluded from this region: ${P}_{12} = {I}_{CH 3} + {P}_{12 e}$

The total amount of propene was quantified as the sum of primary inserted propene and all other present regio-defects: ${P}_{total} = {P}_{12} + {P}_{21 e}$

The mole percent of 2,1 erythro regio-defects was quantified with respect to all propene: $\left[21e\right] mol - % = 100 * \left({P}_{21 e}/{P}_{total}\right)$

The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to: $E = 0.5 \left({S}_{ββ}+{S}_{βγ}+{S}_{βδ}+0.5\left({S}_{αβ}+{S}_{αγ}\right)\right)$

Through the use of this set of sites the corresponding integral equation becomes: $E = 0.5 \left({I}_{H}+{I}_{G}+0.5\left({I}_{C}+{I}_{D}\right)\right)$ using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction: $E \left[mol-%\right] = 100 * {f}_{E}$

The weight percent comonomer incorporation was calculated from the mole fraction: $E \left[wt.-%\right] = 100 * \left({f}_{E}*28.06\right) / \left(\left({f}_{E}*28.06\right)+\left(\left(1-{f}_{E}\right)*42.08\right)\right)$

### CRYSTEX QC analysis

### Crystalline and soluble fractions method

The crystalline (CF) and soluble fractions (SF) of the heterophasic polypropylene-ethylene copolymers (HECO) and random heterophasic polypropylene-ethylene copolymers (RAHECO) as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.
The IR4 detector is a multiple wavelength detector measuring IR absorbance at two different bands (CH₃ stretching vibration (centred at app. 2960 cm⁻¹) and the CH stretching vibration (2700-3000 cm⁻¹) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by ¹³C-NMR) and each at various concentrations, in the range of 2 and 13mg/ml. To encounter for both features, concentration and ethylene content at the same time for various polymer concentrations expected during Crystex analyses the following calibration equations were applied: $Conc = a + b * Abs \left(CH\right) + c * {\left(Abs\left(CH\right)\right)}^{2} + d * Abs \left({CH}_{3}\right) + e * \left(Abs{\left({CH}_{3}\right)}^{2}+f*Abs\left(CH\right)*Abs\left({CH}_{3}\right)\right.$ (Equation 1) ${CH}_{3} / 1000 C = a + b * Abs \left(CH\right) + c * Abs \left({CH}_{3}\right) + d * \left(Abs\left({CH}_{3}\right)/Abs\left(CH\right)\right) + e * {\left(Abs\left({CH}_{3}\right)/Abs\left(CH\right)\right)}^{2}$ (Equation 2)

The constants a to e for equation 1 and a to f for equation 2 were determined by using least square regression analysis.

The CH₃/1000C is converted to the ethylene content in wt.-% using following relationship: $Wt . - % \left(Ethylene in EP Copolymers\right) = 100 - {CH}_{3} / 1000 TC * 0.3$ (Equation 3)

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear: $Wt . - % XS = 1 , 01 * Wt . - % SF$ (Equation 4)

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear: $IV \left(dL/g\right) = a * Vsp / c$ (equation 5)

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR₂ of polypropylene was determined at a temperature of 230 °C and a load of 2.16 kg, while for polyethylene, MFR₂ was determined at a temperature of 190 °C and a load of 2.16 kg.

**The xylene soluble fraction at room temperature (XCS, wt.-%):** The amount of the polymer soluble in xylene was determined at 25 °C according to ISO 16152; 5^{th} edition; 2005-07-01.

**The Flexural Modulus** was determined according to ISO 178 method A (3-point bending test) on 80 mm × 10 mm × 4 mm specimens. Following the standard, a test speed of 2 mm/min and a span length of 16 times the thickness was used. The testing temperature was 23±2 ° C. Injection molding was carried out according to ISO 19069-2 using a melt temperature of 230 °C for all materials irrespective of material melt flow rate.

**DSC analysis, melting temperature (Tₘ) and melting enthalpy (Hₘ), crystallization temperature (T_{c}) and crystallization enthalpy (H_{c}):** measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature (T_{c}) and crystallization enthalpy (H_{c}) were determined from the cooling step, while melting temperature (Tₘ) and melting enthalpy (Hₘ) were determined from the second heating step.

### Seal Strength

The heat-seal experiments were performed in accordance with AST F88-21 on at least 3 film specimens of 85 mm wide by 200 mm length cut in the machine direction. The 5 mm x 150 mm steel heating bars protected by 25 µm thick cellophane film were set to a temperature of 120, 125, 130, 140 or 150 (as specified in the experimental section) °C. Two films were sealed by positioning, one on top of the other using a 0.5 s sealing time and 0.30 N/ mm² pressure. The resulting sealed area was 85 mm x 5 mm. The specimens were then conditioned for at least 16 h (at most 24 h) at 23 °C (± 2 °C) / 50 % RH (± 10%). 10 specimens of 15 mm width were cut and tested in tensile mode at 23 °C (± 2 °C) / 50 % RH (± 10%) on a Universal Testing Machine (Zwick Z005). The clamping distance used was 100 mm, and a test speed of 200 mm/min. The yielding force and maximum force were measured for each test specimen.

### Basic sealing:

- Film width: 15 mm
- Film length: > 200 mm
- Sealed seam width: 15 mm
- Sealing temperature: 120 °C, 125 °C, 130 °C, 140 °C or 150 °C
- Sealing pressure: 0,30 N/mm²
- Sealing time: 0,5 s
- Sealing jaws: Steel with cellophane protection

### Conditioning

- Conditioning time: > 16 to 24 h at 23 °C (± 2 °C) / 50 % RH (± 10%)

### Heat seal strength:

- Test temperature: 23 °C (± 2 °C) / 50 % RH (± 10%)
- Specimen width: 15 mm
- Gripping distance: 100 mm
- Test speed: 100 mm/min
- Test device: Universal Testing Machine

**Maleic anhydride content:** FT-IR standards are prepared by blending a PP homopolymer with different amounts of MAH to create a calibration curve (absorption/thickness in cm versus MAH content in weight %). The MAH content is determined in the solid-state by IR spectroscopy using a Bruker Vertex 70 FTIR spectrometer on 25x25 mm square films of 100 µm thickness (with an accuracy of ± 1 µm) prepared by compression molding at 190 °C with 4 - 6 mPa clamping force. Standard transmission FTIR spectroscopy is employed using a spectral range of 4000-400 cm⁻¹, an aperture of 6 mm, a spectral resolution of 2 cm⁻¹, 16 background scans, 16 spectrum scans, an interferogram zero filling factor of 32 and Norton Beer strong apodisation.

At the adsorption band peak of 1787 cm⁻¹ MAH is measured. For the calculation of the MAH content the range between 1830-1727 cm⁻¹ is evaluated (after a base line correction) following the calibration standard curve.

### 2. Examples

### 2.1 Synthesis of random heterophasic propylene-ethylene copolymers (RAHECO)

For the polymerization process of RAHECO, a Ziegler-Natta type catalyst as used in for the inventive examples of WO2016/066446 A1 was employed (without any vinylcyclohexane prepolymerization).

The catalyst systems defined above were used in combination with triethyl-aluminium (TEAL) as co-catalyst and dicyclopenta dienyl-dimethoxy silane (Donor D) as external donor.

The subsequent polymerizations have been effected under the following conditions.

**Table 1 Polymerization conditions for the heterophasic propylene-ethylene copolymers**

| | | **RAHECO** |
|---|---|---|
| **Prepolymerization** | | |
| [Co]/[ED] | [mol/mol] | 10 |
| [Co]/[Ti] | [mol/mol] | 220 |
| Temperature | [°C] | 25 |
| Residence time | [min] | 15 |

| **Loop reactor** | | |
|---|---|---|
| Temperature | [°C] | 75 |
| Split | [wt.-%] | 35 |
| H2/C3 | [mol/kmol] | 1.70 |
| C2/C3 | [mol/kmol] | 4.5 |
| MFR₂ | [g/10 min] | 8.0 |
| C2 | [wt.-%] | 2.5 |

| **1^{st} Gas phase reactor** | | |
|---|---|---|
| Temperature | [°C] | 80 |
| Split | [wt.-%] | 52 |
| H2/C3 | [mol/kmol] | 21.5 |
| C2/C3 | [mol/kmol] | 28.1 |
| MFR₂ | [g/10 min] | 8.0 |
| XCS | [wt.-%] | 7.5 |
| C2 | [wt.-%] | 4.0 |

| **2^{nd} Gas phase reactor** | | |
|---|---|---|
| Temperature | [°C] | 75 |
| Split | [wt.-%] | 13 |
| H2/C3 | [mol/kmol] | 530 |
| C2/C3 | [mol/kmol] | 490 |
| MFR₂ | [g/10 min] | 7.0 |

| **Final Properties (pellet)** | | |
|---|---|---|
| MFR₂ | [g/10 min] | 7.0 |
| C2 | [wt.-%] | 8.5 |
| SF | [wt.-%] | 22.0 |
| C2(SF) | [wt.-%] | 28.5 |
| iV(SF) | [dL/g] | 1.70 |
| CF | [wt.-%] | 78.0 |
| C2(CF) | [wt.-%] | 2.9 |
| iV(CF) | [dL/g] | 2.10 |
| iV(SF)/iV(CF) | [-] | 0.81 |
| Tm | [°C] | 142 |
| Flexural Modulus | [MPa] | 480 |

The matrix of the RAHECO is free from 2,1-regiodefects.

RAHECO was compounded in a co-rotating twin-screw extruder Coperion ZSK 47 at 220 °C with 0.10 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.03 wt.-% of Ca-stearate (available from Faci, Italy; CAS-no.1592-23-0).

### 2.2 Propylene-ethylene random copolymers (R-PP1, R-PP2 and R-PP3)

The catalyst used in the polymerization process for the propylene-ethylene random copolymers R-PP1, R-PP2 and R-PP3 was also a Ziegler-Natta type catalyst as used in for the inventive examples of WO2016/066446 A1 was employed (without any vinylcyclohexane prepolymerization).

The catalyst system was used in combination with triethyl-aluminium (TEAL) as co-catalyst and dicyclopentadienyl-dimethoxysilane (Donor D) as external donor.

The subsequent polymerizations have been effected under the following conditions.

**Table 2 Polymerization conditions for the propylene-ethylene random copolymers**

| | | **R-PP1** | **R-PP2** | **R-PP3** |
|---|---|---|---|---|
| **Prepolymerization** | | | | |
| [Co]/[ED] | [mol/mol] | 6 | 10 | 6 |
| [Co]/[Ti] | [mol/mol] | 300 | 220 | 300 |
| Temperature | [°C] | 25 | 25 | 25 |
| Residence time | [min] | 20 | 15 | 20 |

| **Loop reactor** | | | | |
|---|---|---|---|---|
| Temperature | [°C] | 75 | 80 | 75 |
| Feed H2/C2 ratio | [mol/kmol] | 0.60 | 0.52 | 0.51 |
| Feed C2/C3 ratio | [mol/kmol] | 5.8 | 6.2 | 5.6 |
| Split | [wt.-%] | 45 | 45 | 45 |
| MFR₂ | [g/10 min] | 3.0 | 2.0 | 2.0 |
| C2 content | [wt.-%] | 3.5 | 3.7 | 3.4 |

| **First GPR** | | | | |
|---|---|---|---|---|
| Temperature | [°C] | 80 | 85 | 80 |
| H2/C3 ratio | [mol/kmol] | 2.5 | 4.6 | 4.8 |
| C2/C3 ratio | [mol/kmol] | 38.0 | 35.1 | 43.5 |
| Split | [wt.-%] | 55 | 55 | 55 |
| MFR₂ | [g/10min] | 1.5 | 2.0 | 2.0 |

| **Pellet** | | | | |
|---|---|---|---|---|
| MFR₂ | [g/10min] | 1.5 | 11 | 2.0 |
| C2 total | [wt.-%] | 4.3 | 4.4 | 4.4 |
| XCS | [wt.-%] | 7.2 | 8.5 | 8.5 |
| Tm | [°C] | 145 | 140 | 140 |
| Tc | [°C] | 115 | 98 | 95 |
| 2,1-regiodefects | [mol-%] | 0.0 | 0.0 | 0.0 |
| Flexural Modulus | [MPa] | 900 | 550 | 700 |

R-PP1 was compounded in a co-rotating twin-screw extruder Coperion ZSK 47 at 220 °C with 0.05 wt.-% of Pentaerythrityl-tetrakis(3-(3',5'-di-tert. butyl-4-hydroxyphenyl)-propionate, (available as Irganox 1010 from BASF AG, Germany; CAS-no. 6683-19-8), 0.06 wt.-% of Tris (2,4-di-t-butylphenyl) phosphite, (available as Irgafos 168 from BASF AG, Germany; CAS-no. 31570-04-4), 0.03 wt.-% of synthetic hydrotalcite (available as ADK STAB HT from Adeka Corporation, Germany; CAS-no. 11097-59-9), 0.12 wt.-% of hydroxybis (2,4,8,10-tetra-t-butyl-6-hydroxy-12H-dibenzo(d,g)(1,3,2) dioxaphosphocin 6-oxidato) aluminium/lithium myrisate blend (60:40), CAS-no 151841-65-5/20336-96-3 (available as ADK STAB NA-21 from Adeka Corporation, Germany).

R-PP2 was compounded and visbroken in a co-rotating twin-screw extruder Coperion ZSK 47 at 220 °C with 0.20 wt.-% of erucamide (available as Crodamide ER beads from Croda International, UK; CAS-no. 112-84-5); 0.18 wt.-% of amorphous silica (available as Sylobloc 45B from Grace GmbH, Germany; CAS-no. 7631-86-9); and 0.10 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.04 wt.-% of Ca-stearate (available from Faci, Italy; CAS-no.1592-23-0); and an appropriate amount (i.e. enough to achieve the target MFR₂ of 11 g/10 min) of peroxide 2,5-Bis(tert.-butylperoxy)-2,5-dimethylhexane (available as Luperox 101 from Arkema, France; CAS-No. 78-63-7).

R-PP3 was compounded in a co-rotating twin-screw extruder Coperion ZSK 47 at 220 °C with 0.10 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); and 0.04 wt.-% of Ca-stearate (available from Faci, Italy; CAS-no.1592-23-0).

### 2.3 Compounding of Inventive and Comparative Multilayer films

The compositions for each layer were pre-mixed as dry blends of pellets.

In addition to the polypropylenes synthesized above, the following commercially available components have been used:
- PMP: maleic anhydride-grafted polypropylene having an MFR₂ (190°C) of ~90 g/10 min, and a maleic anhydride content of 1.4 wt.-% (commercially available from Byk-Chemie GmbH, Germany, under the trade name Skona TPPP 8112 FA)
- LDPE1: low density polyethylene having an MFR₂ (190 °C) of 2.0 g/10 min, a density of 923 kg/m³, and a Tm of 111 °C (commercially available from Borealis AG, under the trade name FT6230)
- LDPE2: low density polyethylene having an MFR₂ (190 °C) of 0.75 g/10 min, a density of 923 kg/m³, and a Tm of 112 °C (commercially available from Borealis AG, under the trade name FT5230)
- LDPE3: low density polyethylene having an MFR₂ (190 °C) of 5.0 g/10 min, a density of 918 kg/m³, and a Tm of 109 °C (commercially available from Borealis AG, under the trade name CT7200)
- LDPE4: low density polyethylene having an MFR₂ (190 °C) of 4.5 g/10 min, a density of 923 kg/m³, and a Tm of 110 °C (commercially available from Borealis AG, under the trade name CA7230)

3-layer films were produced on a SML multilayer cast-film line with three extruders and a multilayer die head, using a melt temperature of 210 °C for all layers and a chill roll temperature of 15 °C. The die width is 1200 mm, and die lip thickness was set at 0.8 mm, adjusting the chill roll speed to achieve a film thickness of 80 µm. The film thickness distribution is skin 15%, core 70%, and sealing layer 15%.

The properties of the inventive and comparative films are given in Table 4.

**Table 3 Recipes for inventive and comparative examples**

| | | | **IE1** | **IE2** | **IE3** | **IE4** | **IE5** | **CE1** |
|---|---|---|---|---|---|---|---|---|
| Skin layer | R-PP3 | [wt.-%] | 95 | 95 | 95 | 95 | 95 | 95 |
| | PMP | [wt.-%] | 5 | 5 | 5 | 5 | 5 | 5 |
| Core layer | RAHECO | [wt.-%] | 98 | 95 | 95 | 95 | 95 | 100 |
| | LDPE1 | [wt.-%] | 2 | 5 | - | - | - | - |
| | LDPE2 | [wt.-%] | - | - | 5 | - | - | - |
| | LDPE3 | [wt.-%] | - | - | - | 5 | - | - |
| | LDPE4 | [wt.-%] | - | - | - | - | 5 | - |
| Sealing layer | RAHECO | [wt.-%] | 40 | 40 | 40 | 40 | 40 | 40 |
| | R-PP1 | [wt.-%] | 30 | 30 | 30 | 30 | 30 | 30 |
| | R-PP2 | [wt.-%] | 30 | 30 | 30 | 30 | 30 | 30 |

**Table 4 Properties of the inventive and comparative multilayer films**

| | | **IE1** | **IE2** | **IE3** | **IE4** | **IE5** | **CE1** |
|---|---|---|---|---|---|---|---|
| T_{c} | [°C] | 101.7 | 100.2 | 103.1 | 99.8 | n.m. | 103.4 |
| H_{c} | [J/g] | 73.3 | 71.6 | 73.6 | 70.7 | n.m. | 72.6 |
| Tₘ | [°C] | 144.2 | 144.7 | 144.1 | 144.6 | n.m. | 144.9 |
| Hₘ | [J/g] | 73.7 | 73.9 | 77 | 72.3 | n.m. | 74.7 |
| Seal strength MD (120 °C) | [N] | 11.3 | 16.7 | 21.7 | 17.2 | 21.5 | 4.7 |
| Seal strength MD (125 °C) | [N] | 26.7 | 25.0 | 26.5 | 23.7 | 23.6 | 26.9 |
| Seal strength MD (130 °C) | [N] | 30.4 | 28.9 | 29.0 | 29.6 | 28.3 | 29.4 |
| Seal strength MD (140 °C) | [N] | 31.3 | 31.9 | 32.1 | 32.2 | 31.9 | 31.9 |
| Seal strength MD (150 °C) | [N] | 33.0 | 30.8 | 34.2 | 34.9 | 33.5 | 31.3 |
| Seal strength TD (120 °C) | [N] | 17.2 | 18,7 | 20.7 | 19.6 | 12.9 | 12.6 |
| Seal strength TD (125 °C) | [N] | 25.6 | 18.6 | 21.3 | 19.0 | 17.6 | 27.6 |
| Seal strength TD (130 °C) | [N] | 24.9 | 19.4 | 19.0 | 19.0 | 19.6 | 25.6 |
| Seal strength TD (140 °C) | [N] | 25.7 | 17.2 | 22.4 | 17.5 | 18.2 | 27.3 |
| Seal strength TD (150 °C) | [N] | 25.6 | 22.2 | 18.4 | 17.5 | 17.5 | 24.7 |

As can be seen from Table 4, the inventive films have improved seal strength at very low sealing temperatures (i.e. 120 °C), whilst the performance of the comparative film drops off significantly below 125 °C. Furthermore, IE1 demonstrates that even when small amounts of LDPE (e.g. 2.0 wt.-%) are employed, the beneficial effect of the invention is still observed.

## Claims

1. A polypropylene-based multilayer film (F), comprising, in the given order, the following layers:
(A) a skin layer, comprising at least 90 wt.-%, based on the total weight of the skin layer, of a polypropylene or mixture of polypropylenes;
(B) a core layer, comprising least 90 wt.-%, based on the total weight of the core layer, of a first polypropylene composition (PC1) comprising the following components:
a) from 85.0 to 99.0 wt.-%, relative to the total weight of the first polypropylene composition (PC1), of a first heterophasic propylene-ethylene copolymer (HECO1) comprising the following components:
a1) a crystalline matrix (M1) being either a propylene homopolymer or a propylene-ethylene random copolymer; and
b1) an amorphous propylene-ethylene elastomer (E1),
wherein the first heterophasic propylene-ethylene copolymer (HECO1) has the following properties:
i) a melt flow rate (MFR₂), determined according to ISO 1133 at 230 °C and 2.16 kg, in the range from 0.1 to 20.0 g/10 min;
ii) a soluble fraction (SF) content in the range from 10 to 45 wt.-% and a crystalline fraction (CF) content in the range from 55 to 90 wt.-%, both determined according to CRYSTEX QC analysis;
iii) an ethylene content (C2(total)), determined by CRYSTEX QC analysis, in the range from 3.0 to 15.0 wt.-%; and
iv) a melting temperature (Tm), determined by differential scanning calorimetry (DSC) according to ISO 11357 / part 3 /method C2, in the range from 130 to 155 °C; and
b) from 1.0 to 15.0 wt.-%, relative to the total weight of the first polypropylene composition (PC1), of a low density polyethylene (LDPE),
wherein the combined amounts of the first heterophasic propylene-ethylene copolymer (HECO1) and the low density polyethylene (LDPE) are at least 95 wt.-%, relative to the total weight of the first polypropylene composition (PC1); and
(C) a sealing layer, comprising at least 90 wt.-%, based on the total weight of the sealing layer, of a polypropylene or mixture of polypropylenes.

2. The polypropylene-based multilayer film (F) according to claim 1, wherein the first heterophasic propylene-ethylene copolymer (HECO1) has one or more, preferably all, of the following properties:
a) an ethylene content of the soluble fraction (C2(SF)), determined by CRYSTEX QC analysis, in the range from 17.0 to 60.0 wt.-%;
b) an ethylene content of the crystalline fraction (C2(CF)), determined by CRYSTEX QC analysis, in the range from 1.0 to 10.0 wt.-%;
c) an intrinsic viscosity of the soluble fraction (iV(SF)) determined by CRYSTEX QC analysis, in the range from 1.20 to 3.50 dL/g;
d) an intrinsic viscosity of the crystalline fraction (iV(CF)) determined by CRYSTEX QC analysis, in the range from 1.20 to 4.50 dL/g;
e) an intrinsic viscosity ratio (iV(SF)/iV(CF)), determined by CRYSTEX QC analysis, in the range from 0.40 to 2.00; and
f) a content of 2,1-regiodefects in the crystalline matrix (M1), as determined by ¹³C-NMR spectroscopy, in the range from 0.00 to 0.20 mol-%.

3. The polypropylene-based multilayer film (F) according to claim 1 or claim 2, wherein the first heterophasic propylene-ethylene copolymer (HECO1) is a first random-heterophasic propylene-ethylene copolymer (RAHECO1) wherein the crystalline matrix (M1) is a propylene-ethylene random copolymer,
wherein the first random-heterophasic propylene-ethylene copolymer (RAHECO 1) has one or more, preferably all, of the following properties:
a) a melt flow rate (MFR₂), determined according to ISO 1133 at 230 °C and 2.16 kg, in the range from 0.1 to 10.0 g/10 min;
b) a soluble fraction (SF) content in the range from 15 to 45 wt.-% and a crystalline fraction (CF) content in the range from 55 to 85 wt.-%, both determined according to CRYSTEX QC analysis;
c) an ethylene content (C2(total)), determined by CRYSTEX QC analysis, in the range from 3.0 to 15.0 wt.-%;
d) an ethylene content of the soluble fraction (C2(SF)), determined by CRYSTEX QC analysis, in the range from 17.0 to 45.0 wt.-%;
e) an ethylene content of the crystalline fraction (C2(CF)), determined by CRYSTEX QC analysis, in the range from 1.0 to 10.0 wt.-%;
f) an intrinsic viscosity of the soluble fraction (iV(SF)) determined by CRYSTEX QC analysis, in the range from 1.20 to 3.50 dL/g;
g) an intrinsic viscosity of the crystalline fraction (iV(CF)) determined by CRYSTEX QC analysis, in the range from 1.20 to 4.50 dL/g;
h) an intrinsic viscosity ratio (iV(SF)/iV(CF)), determined by CRYSTEX QC analysis, in the range from 0.40 to 2.00;
i) a melting temperature (Tm), determined by differential scanning calorimetry (DSC) according to ISO 11357 / part 3 /method C2, in the range from 130 to 155 °C;
j) a content of 2,1-regiodefects in the crystalline matrix (M1), as determined by ¹³C-NMR spectroscopy, in the range from 0.00 to 0.20 mol-%.

4. The polypropylene-based multilayer film according to any one of the preceding claims, wherein the low density polyethylene (LDPE) has one or more, preferably all, of the following properties:
a) a melt flow rate (MFR₂), determined according to ISO 1133 at 190 °C and 2.16 kg, in the range from 0.1 to 20.0 g/10 min;
b) a density, determined according to ISO 1183, in the range from 910 to 930 kg/m³; and
c) a melting temperature (Tm), determined by differential scanning calorimetry (DSC) according to ISO 11357 / part 3 /method C2, in the range from 100 to 130 °C.

5. The polypropylene-based multilayer film (F) according to any one of the preceding claims, wherein the sealing layer comprises at least 90 wt.-%, based on the total weight of the sealing layer, of a second polypropylene composition (PC2) comprising the following components:
a) a second random-heterophasic propylene-ethylene copolymer (RAHECO2), comprising:
a2) a crystalline matrix (M2) being a propylene-ethylene random copolymer; and
b2) an amorphous propylene-ethylene elastomer (E2);
b) one or more propylene-ethylene random copolymers (R-PP);
wherein the combined amounts of the second random-heterophasic propylene-ethylene copolymer (RAHECO2) and the one or more propylene-ethylene random copolymers (R-PP) are at least 90 wt.-%, relative to the total weight of the second polypropylene composition (PC2).

6. The polypropylene-based multilayer film (F) according to claim 5, wherein the second random-heterophasic propylene-ethylene copolymer (RAHECO2) has one or more, preferably all, of the following properties:
a) a melt flow rate (MFR₂), determined according to ISO 1133 at 230 °C and 2.16 kg, in the range from 0.1 to 10.0 g/10 min;
b) a soluble fraction (SF) content in the range from 15 to 45 wt.-% and a crystalline fraction (CF) content in the range from 55 to 85 wt.-%, both determined according to CRYSTEX QC analysis;
c) an ethylene content of the soluble fraction (C2(SF)), determined by CRYSTEX QC analysis, in the range from 17.0 to 45.0 wt.-%;
d) an ethylene content of the crystalline fraction (C2(CF)), determined by CRYSTEX QC analysis, in the range from 1.0 to 10.0 wt.-%;
e) an intrinsic viscosity of the soluble fraction (iV(SF)) determined by CRYSTEX QC analysis, in the range from 1.20 to 3.50 dL/g;
f) an intrinsic viscosity of the crystalline fraction (iV(CF)) determined by CRYSTEX QC analysis, in the range from 1.20 to 4.50 dL/g; and
g) an intrinsic viscosity ratio (iV(SF)/iV(CF)), determined by CRYSTEX QC analysis, in the range from 0.40 to 2.00;
h) a melting temperature (Tm), determined by differential scanning calorimetry (DSC) according to ISO 11357 / part 3 /method C2, in the range from 130 to 155 °C; and
i) a content of 2,1-regiodefects in the crystalline matrix (M2), as determined by ¹³C-NMR spectroscopy, in the range from 0.00 to 0.20 mol-%.

7. The polypropylene-based multilayer film (F) according to claim 5 or claim 6, wherein the first heterophasic propylene-ethylene copolymer (HECO1) is a first random-heterophasic propylene-ethylene copolymer (RAHECO1) wherein the crystalline matrix (M1) is a propylene-ethylene random copolymer and the second random-heterophasic propylene-ethylene copolymer (RAHECO2) is the same as the first random-heterophasic propylene-ethylene copolymer (RAHECO1).

8. The polypropylene-based multilayer film (F) according to any one of claims 5 to 7, wherein the second polypropylene composition (PC2) comprises the following components:
a) the second random-heterophasic propylene-ethylene copolymer (RAHECO2);
b) a first propylene-ethylene random copolymer (R-PP1) having a crystallization temperature (Tc), determined by differential scanning calorimetry (DSC) according to ISO 11357 / part 3 /method C2, in the range from 110 to 125 °C; and
c) a second propylene-ethylene random copolymer (R-PP2) having a crystallization temperature (Tc), determined by differential scanning calorimetry (DSC) according to ISO 11357 / part 3 /method C2, in the range from 85 to 109 °C;
wherein the combined amounts of the second random-heterophasic propylene-ethylene copolymer (RAHECO2), the first propylene-ethylene random copolymer (R-PP1), and the second propylene-ethylene random copolymer (R-PP2) are at least 90 wt.-%, relative to the total weight of the second polypropylene composition (PC2).

9. The polypropylene-based multilayer film (F) according to claim 8, wherein the first propylene-ethylene random copolymer (R-PP1) has one or more, preferably all, of the following properties:
a) a melt flow rate (MFR₂), determined according to ISO 1133 at 230 °C and 2.16 kg, in the range from 1.0 to 5.0 g/10 min;
b) an ethylene content (C2), determined by quantitative ¹³C-NMR spectroscopy, in the range from 1.0 to 10.0 wt.-%;
c) a xylene cold soluble (XCS) content, determined according to ISO 16152 analysis, in the range from 1.0 to 15.0 wt.-%;
d) a melting temperature (Tm), determined by differential scanning calorimetry (DSC) according to ISO 11357 / part 3 /method C2, in the range from 130 to 150 °C;
e) a content of 2,1-regiodefects, as determined by ¹³C-NMR spectroscopy, in the range from 0.00 to 0.20 mol-%.

10. The polypropylene-based multilayer film (F) according to claim 8 or claim 9, wherein the second propylene-ethylene random copolymer (R-PP2):
a) a melt flow rate (MFR₂), determined according to ISO 1133 at 230 °C and 2.16 kg, in the range from 5.5 to 20.0 g/10 min;
b) an ethylene content (C2), determined by quantitative ¹³C-NMR spectroscopy, in the range from 1.0 to 10.0 wt.-%;
c) a xylene cold soluble (XCS) content, determined according to ISO 16152 analysis, in the range from 1.0 to 15.0 wt.-%;
d) a melting temperature (Tm), determined by differential scanning calorimetry (DSC) according to ISO 11357 / part 3 /method C2, in the range from 130 to 150 °C; and
e) a content of 2,1-regiodefects, as determined by ¹³C-NMR spectroscopy, in the range from 0.00 to 0.20 mol-%.

11. The polypropylene-based multilayer film (F) according to any one of claims 5 to 10, wherein the second polypropylene composition (PC2) comprises:
a) from 20 to 70 wt.-%, relative to the total weight of the second polypropylene composition (PC2), of the second random-heterophasic propylene-ethylene copolymer (RAHECO2);
b) from 30 to 80 wt.-%, relative to the total weight of the second polypropylene composition (PC2), of the one or more propylene-ethylene random copolymers (R-PP),
more preferably the second polypropylene composition (PC2) comprises:
a) from 20 to 70 wt.-%, relative to the total weight of the second polypropylene composition (PC2), of the second random-heterophasic propylene-ethylene copolymer (RAHECO2);
b) from 10 to 50 wt.-%, relative to the total weight of the second polypropylene composition (PC2), of the first propylene-ethylene random copolymer (R-PP1) as defined in either claim 8 or claim 9; and
c) from 10 to 50 wt.-%, relative to the total weight of the second polypropylene composition (PC2), of the second propylene-ethylene random copolymer (R-PP2) as defined in either claim 8 or claim 10.

12. The polypropylene-based multilayer film (F) according to any one of the preceding claims, wherein the skin layer comprises at least 90 wt.-% of a third propylene-ethylene random copolymer (R-PP3), having one or more, preferably all, of the following properties:
a) a melt flow rate (MFR₂), determined according to ISO 1133 at 230 °C and 2.16 kg, in the range from 1.0 to 10.0 g/10 min;
b) an ethylene content (C2), determined by quantitative ¹³C-NMR spectroscopy, in the range from 1.0 to 10.0 wt.-%;
c) a xylene cold soluble (XCS) content, determined according to ISO 16152 analysis, in the range from 1.0 to 15.0 wt.-%;
d) a melting temperature (Tm), determined by differential scanning calorimetry (DSC) according to ISO 11357 / part 3 /method C2, in the range from 130 to 150 °C;
e) a crystallization temperature (Tc), determined by differential scanning calorimetry (DSC) according to ISO 11357 / part 3 /method C2, in the range from 85 to 105 °C; and
f) a content of 2,1-regiodefects, as determined by ¹³C-NMR spectroscopy, in the range from 0.00 to 0.20 mol-%.

13. The polypropylene-based multilayer film (F) according to any one of the preceding claims, wherein the skin layer comprises an amount in the range from 1 to 10 wt.-%, relative to the total weight of the skin layer, of a polar modified polypropylene (PMP), wherein the polar modified polypropylene is preferably a maleic anhydride-grafted polypropylene (MAH-PP) having:
a) a melt flow rate (MFR₂), determined according to ISO 1133 at 230 °C and 2.16 kg, in the range from 50 to 250 g/10 min; and/or
b) a content of maleic anhydride (MAH), determined according to FT-IR spectroscopic analysis, in the range from 0.1 to 5.0 wt.-%.

14. The polypropylene-based multilayer film (F) according to any one of the preceding claims having a thickness in the range from 20 to 250 µm, preferably wherein:
a) the skin layer has a thickness in the range from 8 to 30% of the total thickness of the multilayer film (F);
b) the core layer has a thickness in the range from 40 to 84% of the total thickness of the multilayer film (F); and
c) the sealing layer has a thickness in the range from 8 to 30% of the total thickness of the multilayer film (F).

15. The polypropylene-based multilayer film (F) according to any one of the preceding claims, having:
a) a seal strength in the machine direction, determined according to the method specified in the measurement methods at a sealing temperature of 120 °C, in the range from 6 to 30 N; and/or
b) a seal strength in the transverse direction, determined according to the method specified in the measurement methods at a sealing temperature of 120 °C, in the range from 12 to 30 N.

## Patentansprüche

1. Eine mehrschichtige Folie (F) auf Polypropylenbasis, die in der angegebenen Reihenfolge die folgenden Schichten umfasst:
(A) eine Deckschicht, die mindestens 90 Gew.-%, bezogen auf das Gesamtgewicht der Deckschicht, eines Polypropylens oder eines Gemisches aus Polypropylenen umfasst;
(B) eine Kernschicht, die mindestens 90 Gew.-%, bezogen auf das Gesamtgewicht der Kernschicht, einer ersten Polypropylen-Zusammensetzung (PC1) umfasst, die die folgenden Komponenten enthält:
a) 85,0 bis 99,0 Gew.-%, bezogen auf das Gesamtgewicht der ersten Polypropylen-Zusammensetzung (PC1), eines ersten heterophasischen Propylen-Ethylen-Copolymers (HECO1), das die folgenden Komponenten umfasst:
a1) eine kristalline Matrix (M1), die entweder ein Propylen-Homopolymer oder ein statistisches Propylen-Ethylen-Copolymer ist; und
b1) ein amorphes Propylen-Ethylen-Elastomer (E1),
wobei das erste heterophasische Propylen-Ethylen-Copolymer (HECO1) die folgenden Eigenschaften aufweist:
i) einen Schmelzindex (MFR₂), bestimmt gemäß ISO 1133 bei 230 °C und 2,16 kg, im Bereich von 0,1 bis 20,0 g/10 min;
ii) einen Gehalt an löslicher Fraktion (SF) im Bereich von 10 bis 45 Gew.-% und einen Gehalt an kristalliner Fraktion (CF) im Bereich von 55 bis 90 Gew.-%, beide bestimmt gemäß CRYSTEX-QC-Analyse;
iii) einen Ethylengehalt (C2(gesamt)), bestimmt durch die CRYSTEX-QC-Analyse, im Bereich von 3,0 bis 15,0 Gew.-%; und
iv) eine Schmelztemperatur (Tm), bestimmt durch Differential-Scanning-Kalorimetrie (DSC) gemäß ISO 11357 / Teil 3 / Methode C2, im Bereich von 130 bis 155 °C; und
b) von 1,0 bis 15,0 Gew.-%, bezogen auf das Gesamtgewicht der ersten Polypropylen-Zusammensetzung (PC1), eines Polyethylens niedriger Dichte (LDPE),
wobei die Gesamtmenge des ersten heterophasischen Propylen-Ethylen-Copolymers (HECO1) und des Polyethylens niedriger Dichte (LDPE) mindestens 95 Gew.-%, bezogen auf das Gesamtgewicht der ersten Polypropylen-Zusammensetzung (PC1), beträgt; und
(C) eine Siegelschicht, die mindestens 90 Gew.-%, bezogen auf das Gesamtgewicht der Siegelschicht, eines Polypropylens oder eines Gemisches aus Polypropylenen umfasst.

2. Die mehrschichtige Folie (F) auf Polypropylenbasis gemäß Anspruch 1, wobei das erste heterophasische Propylen-Ethylen-Copolymer (HECO1) eine oder mehrere, vorzugsweise alle der folgenden Eigenschaften aufweist:
a) einen Ethylengehalt der löslichen Fraktion (C2(SF)), bestimmt durch CRYSTEX-QC-Analyse, im Bereich von 17,0 bis 60,0 Gew.-%;
b) einen Ethylengehalt der kristallinen Fraktion (C2(CF)), bestimmt durch CRYSTEX-QC-Analyse, im Bereich von 1,0 bis 10,0 Gew.-%;
c) eine durch CRYSTEX-QC-Analyse bestimmte intrinsische Viskosität der löslichen Fraktion (iV(SF)) im Bereich von 1,20 bis 3,50 dL/g;
d) eine durch CRYSTEX-QC-Analyse bestimmte intrinsische Viskosität der kristallinen Fraktion (iV(CF)) im Bereich von 1,20 bis 4,50 dL/g;
e) ein durch CRYSTEX-QC-Analyse bestimmtes Verhältnis der intrinsischen Viskositäten (iV(SF)/iV(CF)) im Bereich von 0,40 bis 2,00; und
f) einen Gehalt an 2,1-Regiodefekten in der kristallinen Matrix (M1), bestimmt mittels ¹³C-NMR-Spektroskopie, im Bereich von 0,00 bis 0,20 Mol-%;

3. Die mehrschichtige Folie (F) auf Polypropylenbasis gemäß Anspruch 1 oder Anspruch 2, wobei das erste heterophasische Propylen-Ethylen-Copolymer (HECO1) ein erstes statistisches heterophasisches Propylen-Ethylen-Copolymer (RAHECO1) ist, bei dem die kristalline Matrix (M1) ein statistisches Propylen-Ethylen-Copolymer ist,
wobei das erste statistische heterophasische Propylen-Ethylen-Copolymer (RAHECO1) eine oder mehrere, vorzugsweise alle der folgenden Eigenschaften aufweist:
a) eine Schmelzflussrate (MFR₂), bestimmt gemäß ISO 1133 bei 230 °C und 2,16 kg, im Bereich von 0,1 bis 10,0 g/10 min;
b) einen Gehalt an löslicher Fraktion (SF) im Bereich von 15 bis 45 Gew.-% und einen Gehalt an kristalliner Fraktion (CF) im Bereich von 55 bis 85 Gew.-%, beide bestimmt gemäß der CRYSTEX-QC-Analyse;
c) einen Ethylengehalt (C2(gesamt)), bestimmt durch CRYSTEX-QC-Analyse, im Bereich von 3,0 bis 15,0 Gew.-%;
d) einen Ethylengehalt der löslichen Fraktion (C2(SF)), bestimmt durch die CRYSTEX-QC-Analyse, im Bereich von 17,0 bis 45,0 Gew.-%;
e) einen Ethylengehalt der kristallinen Fraktion (C2(CF)), bestimmt durch CRYSTEX-QC-Analyse, im Bereich von 1,0 bis 10,0 Gew.-%;
f) eine durch CRYSTEX-QC-Analyse bestimmte intrinsische Viskosität der löslichen Fraktion (iV(SF)) im Bereich von 1,20 bis 3,50 dL/g;
g) eine durch CRYSTEX-QC-Analyse bestimmte intrinsische Viskosität der kristallinen Fraktion (iV(CF)) im Bereich von 1,20 bis 4,50 dL/g;
h) ein durch CRYSTEX-QC-Analyse bestimmtes Verhältnis der intrinsischen Viskositäten (iV(SF)/iV(CF)) im Bereich von 0,40 bis 2,00;
i) eine Schmelztemperatur (Tm), bestimmt durch Differential-Scanning-Kalorimetrie (DSC) gemäß ISO 11357 / Teil 3 / Methode C2, im Bereich von 130 bis 155 °C;
j) einen Gehalt an 2,1-Regiodefekten in der kristallinen Matrix (M1), bestimmt mittels ¹³C-NMR-Spektroskopie, im Bereich von 0,00 bis 0,20 Mol-%;

4. Die mehrschichtige Folie (F) auf Polypropylenbasis gemäß einem der vorstehenden Ansprüche, wobei das Polyethylen niedriger Dichte (LDPE) eine oder mehrere, vorzugsweise alle der folgenden Eigenschaften aufweist:
a) einen Schmelzindex (MFR₂), bestimmt gemäß ISO 1133 bei 190 °C und 2,16 kg, im Bereich von 0,1 bis 20,0 g/10 min;
b) eine Dichte, bestimmt gemäß ISO 1183, im Bereich von 910 bis 930 kg/m³; und
c) eine Schmelztemperatur (Tm), bestimmt durch Differential-Scanning-Kalorimetrie (DSC) gemäß ISO 11357 / Teil 3 / Methode C2, im Bereich von 100 bis 130 °C.

5. Die mehrschichtige Folie (F) auf Polypropylenbasis gemäß einem der vorstehenden Ansprüche, wobei die Siegelschicht mindestens 90 Gew.-%, bezogen auf das Gesamtgewicht der Siegelschicht, einer zweiten Polypropylen-Zusammensetzung (PC2) umfasst, die die folgenden Komponenten enthält:
a) ein zweites statistisches heterophasisches Propylen-Ethylen-Copolymer (RAHECO2), umfassend:
a2) eine kristalline Matrix (M2), die ein statistisches Propylen-Ethylen-Copolymer ist; und
b2) ein amorphes Propylen-Ethylen-Elastomer (E2);
b) einem oder mehreren statistischen Propylen-Ethylen-Copolymeren (R-PP);
wobei die Gesamtmenge des zweiten statistischen heterophasischen Propylen-Ethylen-Copolymers (RAHECO2) und des einen oder der mehreren statistischen Propylen-EthylenCopolymere (R-PP) mindestens 90 Gew.-%, bezogen auf das Gesamtgewicht der zweiten Polypropylen-Zusammensetzung (PC2), beträgt.

6. Die mehrschichtige Folie (F) auf Polypropylenbasis gemäß Anspruch 5, wobei das zweite statistische heterophasische Propylen-Ethylen-Copolymer (RAHECO2) eine oder mehrere, vorzugsweise alle der folgenden Eigenschaften aufweist:
a) einen Schmelzindex (MFR₂), bestimmt gemäß ISO 1133 bei 230 °C und 2,16 kg, im Bereich von 0,1 bis 10,0 g/10 min;
b) einen Gehalt an löslicher Fraktion (SF) im Bereich von 15 bis 45 Gew.-% und einen Gehalt an kristalliner Fraktion (CF) im Bereich von 55 bis 85 Gew.-%, beide bestimmt gemäß der CRYSTEX-QC-Analyse;
c) einen Ethylengehalt der löslichen Fraktion (C2(SF)), bestimmt durch CRYSTEX-QC-Analyse, im Bereich von 17,0 bis 45,0 Gew.-%;
d) einen Ethylengehalt der kristallinen Fraktion (C2(CF)), bestimmt durch die CRYSTEX-QC-Analyse, im Bereich von 1,0 bis 10,0 Gew.-%;
e) eine intrinsische Viskosität der löslichen Fraktion (iV(SF)), bestimmt durch CRYSTEX-QC-Analyse, im Bereich von 1,20 bis 3,50 dL/g;
f) eine durch CRYSTEX-QC-Analyse bestimmte intrinsische Viskosität der kristallinen Fraktion (iV(CF)) im Bereich von 1,20 bis 4,50 dL/g; und
g) ein durch CRYSTEX-QC-Analyse bestimmtes Verhältnis der intrinsischen Viskositäten (iV(SF)/iV(CF)) im Bereich von 0,40 bis 2,00;
h) eine Schmelztemperatur (Tm), bestimmt durch Differential-Scanning-Kalorimetrie (DSC) gemäß ISO 11357 / Teil 3 / Methode C2, im Bereich von 130 bis 155 °C; und
i) einen Gehalt an 2,1-Regiodefekten in der kristallinen Matrix (M2), bestimmt mittels ¹³C-NMR-Spektroskopie, im Bereich von 0,00 bis 0,20 Mol-%.

7. Die mehrschichtige Folie (F) auf Polypropylenbasis gemäß Anspruch 5 oder Anspruch 6, wobei das erste heterophasische Propylen-Ethylen-Copolymer (HECO1) ein erstes statistisches heterophasisches Propylen-Ethylen-Copolymer (RAHECO1) ist, wobei die kristalline Matrix (M1) ein statistisches Propylen-Ethylen-Copolymer ist und das zweite statistisch-heterophasische Propylen-Ethylen-Copolymer (RAHECO2) mit dem ersten statistischen heterophasischen Propylen-Ethylen-Copolymer (RAHECO1) identisch ist.

8. Die mehrschichtige Folie (F) auf Polypropylenbasis gemäß einem der Ansprüche 5 bis 7, wobei die zweite Polypropylen-Zusammensetzung (PC2) die folgenden Komponenten umfasst:
a) das zweite statistische heterophasische Propylen-Ethylen-Copolymer (RAHECO2);
b) ein erstes statistisches Propylen-Ethylen-Copolymer (R-PP1) mit einer Kristallisationstemperatur (Tc), bestimmt durch Differential-Scanning-Kalorimetrie (DSC) gemäß ISO 11357 / Teil 3 / Methode C2, im Bereich von 110 bis 125 °C; und
c) ein zweites statistisches Propylen-Ethylen-Copolymer (R-PP2) mit einer Kristallisationstemperatur (Tc), bestimmt mittels Differential-Scanning-Kalorimetrie (DSC) gemäß ISO 11357 / Teil 3 / Methode C2, im Bereich von 85 bis 109 °C;
wobei die Gesamtmenge des zweiten statistischen heterophasischen Propylen-Ethylen-Copolymers (RAHECO2), des ersten statistischen Propylen-Ethylen-Copolymers (R-PP1) und des zweiten statistischen Propylen-Ethylen-Copolymers (R-PP2) mindestens 90 Gew.-%, bezogen auf das Gesamtgewicht der zweiten Polypropylen-Zusammensetzung (PC2), beträgt.

9. Die mehrschichtige Folie (F) auf Polypropylenbasis gemäß Anspruch 8, wobei das erste statistische Propylen-Ethylen-Copolymer (R-PP1) eine oder mehrere, vorzugsweise alle der folgenden Eigenschaften aufweist:
a) eine Schmelzflussrate (MFR₂), bestimmt gemäß ISO 1133 bei 230 °C und 2,16 kg, im Bereich von 1,0 bis 5,0 g/10 min;
b) einen Ethylengehalt (C2), bestimmt durch quantitative ¹³C-NMR-Spektroskopie, im Bereich von 1,0 bis 10,0 Gew.-%;
c) einen Gehalt an in Xylol kaltlöslichen Bestandteilen (XCS), bestimmt gemäß der Analyse nach ISO 16152, im Bereich von 1,0 bis 15,0 Gew.-%;
d) eine Schmelztemperatur (Tm), bestimmt durch Differential-Scanning-Kalorimetrie (DSC) gemäß ISO 11357 / Teil 3 / Methode C2, im Bereich von 130 bis 150 °C;
e) ein Gehalt an 2,1-Regiodefekten, bestimmt mittels ¹³C-NMR-Spektroskopie, im Bereich von 0,00 bis 0,20 Mol-%.

10. Die mehrschichtige Folie (F) auf Polypropylenbasis gemäß Anspruch 8 oder Anspruch 9, wobei das zweite statistische Propylen-Ethylen-Copolymer (R-PP2):
a) eine Schmelzflussrate (MFR₂), bestimmt gemäß ISO 1133 bei 230 °C und 2,16 kg, im Bereich von 5,5 bis 20,0 g/10 min;
b) einen Ethylengehalt (C2), bestimmt durch quantitative ¹³C-NMR-Spektroskopie, im Bereich von 1,0 bis 10,0 Gew.-%;
c) einen Gehalt an in Xylol kaltlöslichen Bestandteilen (XCS), bestimmt gemäß der Analyse nach ISO 16152, im Bereich von 1,0 bis 15,0 Gew.-%;
d) eine Schmelztemperatur (Tm), bestimmt durch Differential-Scanning-Kalorimetrie (DSC) gemäß ISO 11357 / Teil 3 / Methode C2, im Bereich von 130 bis 150 °C; und
e) einen Gehalt an 2,1-Regiodefekten, bestimmt mittels ¹³C-NMR-Spektroskopie, im Bereich von 0,00 bis 0,20 Mol-%.

11. Die mehrschichtige Folie (F) auf Polypropylenbasis gemäß einem der Ansprüche 5 bis 10, wobei die zweite Polypropylen-Zusammensetzung (PC2) umfasst:
a) 20 bis 70 Gew.-%, bezogen auf das Gesamtgewicht der zweiten Polypropylen-Zusammensetzung (PC2), des zweiten statistischen heterophasischen Propylen-Ethylen-Copolymers (RAHECO2);
b) 30 bis 80 Gew.-%, bezogen auf das Gesamtgewicht der zweiten Polypropylen-Zusammensetzung (PC2), des einen oder der mehreren statistischen Propylen-EthylenCopolymere (R-PP),
vorzugsweise umfasst die zweite Polypropylen-Zusammensetzung (PC2):
a) 20 bis 70 Gew.-%, bezogen auf das Gesamtgewicht der zweiten Polypropylen-Zusammensetzung (PC2), des zweiten statistischen heterophasischen Propylen-Ethylen-Copolymers (RAHECO2);
b) 10 bis 50 Gew.-%, bezogen auf das Gesamtgewicht der zweiten Polypropylen-Zusammensetzung (PC2), des ersten statistischen Propylen-Ethylen-Copolymers (R-PP1), wie es entweder in Anspruch 8 oder in Anspruch 9 definiert ist; und
c) 10 bis 50 Gew.-%, bezogen auf das Gesamtgewicht der zweiten Polypropylen-Zusammensetzung (PC2), des zweiten statistischen Propylen-Ethylen-Copolymers (R-PP2), wie es entweder in Anspruch 8 oder in Anspruch 10 definiert ist.

12. Die mehrschichtige Folie (F) auf Polypropylenbasis gemäß einem der vorstehenden Ansprüche, wobei die Deckschicht mindestens 90 Gew.-% eines dritten statistischen Propylen-Ethylen-Copolymers (R-PP3) umfasst, das eine oder mehrere, vorzugsweise alle der folgenden Eigenschaften aufweist:
a) eine Schmelzflussrate (MFR₂), bestimmt gemäß ISO 1133 bei 230 °C und 2,16 kg, im Bereich von 1,0 bis 10,0 g/10 min;
b) einen Ethylengehalt (C2), bestimmt durch quantitative ¹³C-NMR-Spektroskopie, im Bereich von 1,0 bis 10,0 Gew.-%;
c) einen Gehalt an in Xylol kaltlöslichen Bestandteilen (XCS), bestimmt gemäß der Analyse nach ISO 16152, im Bereich von 1,0 bis 15,0 Gew.-%;
d) eine Schmelztemperatur (Tm), bestimmt durch Differential-Scanning-Kalorimetrie (DSC) gemäß ISO 11357 / Teil 3 / Methode C2, im Bereich von 130 bis 150 °C;
e) eine Kristallisationstemperatur (Tc), bestimmt durch Differential-Scanning-Kalorimetrie (DSC) gemäß ISO 11357 / Teil 3 / Methode C2, im Bereich von 85 bis 105 °C; und
f) einen Gehalt an 2,1-Regiodefekten, bestimmt mittels ¹³C-NMR-Spektroskopie, im Bereich von 0,00 bis 0,20 Mol-%.

13. Die mehrschichtige Folie (F) auf Polypropylenbasis gemäß einem der vorstehenden Ansprüche, wobei die Deckschicht eine Menge im Bereich von 1 bis 10 Gew.-%, bezogen auf das Gesamtgewicht der Deckschicht, eines polar modifizierten Polypropylens (PMP) umfasst, wobei das polar modifizierte Polypropylen vorzugsweise ein mit Maleinsäureanhydrid gepfropftes Polypropylen (MAH-PP) ist, das Folgendes aufweist:
a) eine Schmelzflussrate (MFR₂), bestimmt gemäß ISO 1133 bei 230 °C und 2,16 kg, im Bereich von 50 bis 250 g/10 min; und/oder
b) einen Gehalt an Maleinsäureanhydrid (MAH), bestimmt gemäß FT-IR-Spektroskopie, im Bereich von 0,1 bis 5,0 Gew.-%.

14. Die mehrschichtige Folie (F) auf Polypropylenbasis gemäß einem der vorstehenden Ansprüche, die eine Dicke im Bereich von 20 bis 250 µm aufweist, wobei vorzugsweise:
a) die Deckschicht eine Dicke im Bereich von 8 bis 30 % der Gesamtdicke der Mehrschichtfolie (F) aufweist;
b) die Kernschicht eine Dicke im Bereich von 40 bis 84 % der Gesamtdicke der Mehrschichtfolie (F) aufweist; und
c) die Siegelschicht eine Dicke im Bereich von 8 bis 30 % der Gesamtdicke der Mehrschichtfolie (F) aufweist.

15. Die mehrschichtige Folie (F) auf Polypropylenbasis gemäß einem der vorstehenden Ansprüche, die Folgendes aufweist:
a) eine Siegelfestigkeit in Maschinenrichtung, bestimmt gemäß dem in den Messverfahren angegebenen Verfahren bei einer Siegeltemperatur von 120 °C, im Bereich von 6 bis 30 N; und/oder
b) eine Siegelfestigkeit in Querrichtung, bestimmt gemäß dem in den Messverfahren angegebenen Verfahren bei einer Siegeltemperatur von 120 °C, im Bereich von 12 bis 30 N.

## Revendications

1. Film multicouche à base de polypropylène (F), comprenant, dans l'ordre donné, les couches suivantes :
(A) une couche de peau, comprenant au moins 90 % en poids, sur la base du poids total de la couche de peau, d'un polypropylène ou mélange de polypropylènes ;
(B) une couche centrale, comprenant au moins 90 % en poids, sur la base du poids total de la couche centrale, d'une première composition de polypropylène (PC1) comprenant les composants suivants :
a) de 85,0 à 99,0 % en poids, par rapport au poids total de la première composition de polypropylène (PC1), d'un premier copolymère hétérophasique de propylène-éthylène (HECO1) comprenant les composants suivants :
a1) une matrice cristalline (M1) qui est soit un homopolymère de propylène, soit un copolymère statistique de propylène-éthylène ; et
b1) un élastomère amorphe de propylène-éthylène (E1),
dans lequel le premier copolymère hétérophasique de propylène-éthylène (HECO1) présente les propriétés suivantes :
i) un indice de fluidité à chaud (MFR₂) déterminé selon la norme ISO 1133 à 230 °C et 2,16 kg, dans la plage de 0,1 à 20,0 g/10 min ;
ii) une teneur en fraction soluble (SF) dans la plage de 10 à 45 % en poids et une teneur en fraction cristalline (CF) dans la plage de 55 à 90 % en poids, toutes deux déterminées selon l'analyse CRYSTEX QC ;
iii) une teneur en éthylène (C2(total)), déterminée par analyse CRYSTEX QC, dans la plage de 3,0 à 15,0 % en poids ; et
iv) une température de fusion (Tm), déterminée par calorimétrie différentielle à balayage (DSC) selon la norme ISO 11357 / partie 3 / méthode C2, dans la plage de 130 à 155 °C ; et
b) de 1,0 à 15,0 % en poids, par rapport au poids total de la première composition de polypropylène (PC1), d'un polyéthylène basse densité (LDPE),
dans lequel les quantités combinées du premier copolymère hétérophasique de propylène-éthylène (HECO1) et du polyéthylène basse densité (LDPE) sont d'au moins 95 % en poids, par rapport au poids total de la première composition de polypropylène (PC1) ; et
(C) une couche de scellement, comprenant au moins 90 % en poids, sur la base du poids total de la couche de scellement, d'un polypropylène ou mélange de polypropylènes.

2. Film multicouche à base de polypropylène (F) selon la revendication 1, dans lequel le premier copolymère hétérophasique de propylène-éthylène (HECO1) présente une ou plusieurs, de préférence la totalité, des propriétés suivantes :
a) une teneur en éthylène de la fraction soluble (C2(SF)), déterminée par analyse CRYSTEX QC, dans la plage de 17,0 à 60,0 % en poids ;
b) une teneur en éthylène de la fraction cristalline (C2(CF)), déterminée par analyse CRYSTEX QC, dans la plage de 1,0 à 10,0 % en poids ;
c) une viscosité intrinsèque de la fraction soluble (iV(SF)) déterminée par analyse CRYSTEX QC, dans la plage de 1,20 à 3,50 dl/g ;
d) une viscosité intrinsèque de la fraction cristalline (iV(CF)) déterminée par analyse CRYSTEX QC, dans la plage de 1,20 à 4,50 dl/g ; et
e) un rapport de viscosités intrinsèques (iV(SF)/iV(CF)), déterminé par analyse CRYSTEX QC, dans la plage de 0,40 à 2,00 ; et
f) une teneur en régiodéfauts 2,1 dans la matrice cristalline (M1), telle que déterminée par spectroscopie RMN ¹³C, dans la plage de 0,00 à 0,20 % en mole.

3. Film multicouche à base de polypropylène (F) selon la revendication 1 ou la revendication 2, dans lequel le premier copolymère hétérophasique de propylène-éthylène (HECO1) est un premier copolymère statistique hétérophasique de propylène-éthylène (RAHECO1) dans lequel la matrice cristalline (M1) est un copolymère statistique de propylène-éthylène,
dans lequel le premier copolymère statistique hétérophasique de polypropylène-éthylène (RAHECO1) présente une ou plusieurs, de préférence la totalité, des propriétés suivantes :
a) un indice de fluidité à chaud (MFR₂), déterminé selon la norme ISO 1133 à 230 °C et 2,16 kg, dans la plage de 0,1 à 10,0 g/10 min ;
b) une teneur en fraction soluble (SF) dans la plage de 15 à 45 % en poids et une teneur en fraction cristalline (CF) dans la plage de 55 à 85 % en poids, toutes deux déterminées selon l'analyse CRYSTEX QC ;
c) une teneur en éthylène (C2(total)), déterminée par analyse CRYSTEX QC, dans la plage de 3,0 à 15,0 % en poids ;
d) une teneur en éthylène de la fraction soluble (C2(SF)), déterminée par analyse CRYSTEX QC, dans la plage de 17,0 à 45,0 % en poids ;
e) une teneur en éthylène de la fraction cristalline (C2(CF)), déterminée par analyse CRYSTEX QC, dans la plage de 1,0 à 10,0 % en poids ;
f) une viscosité intrinsèque de la fraction soluble (iV(SF)) déterminée par analyse CRYSTEX QC, dans la plage de 1,20 à 3,50 dl/g ;
g) une viscosité intrinsèque de la fraction cristalline (iV(CF)) déterminée par analyse CRYSTEX QC, dans la plage de 1,20 à 4,50 dl/g ; et
h) un rapport de viscosités intrinsèques (iV(SF)/iV(CF)), déterminé par analyse CRYSTEX QC, dans la plage de 0,40 à 2,00 ;
i) une température de fusion (Tm), déterminée par calorimétrie différentielle à balayage (DSC) selon la norme ISO 11357 / partie 3 /méthode C2 dans la plage de 130 à 155 °C ;
j) une teneur en régiodéfauts 2,1 dans la matrice cristalline (M1), telle que déterminée par spectroscopie RMN ¹³C, dans la plage de 0,00 à 0,20 % en mole.

4. Film multicouche à base de polypropylène selon l'une des revendications précédentes, dans lequel le polyéthylène basse densité (LDPE) présente une ou plusieurs, de préférence la totalité, des propriétés suivantes :
a) un indice de fluidité à chaud (MFR₂), déterminé selon la norme ISO 1133 à 190 °C et 2,16 kg, dans la plage de 0,1 à 20,0 g/10 min ;
b) une masse volumique, déterminée selon la norme ISO 1183 dans la plage de 910 à 930 kg/m³ ; et
c) une température de fusion (Tm), déterminée par calorimétrie différentielle à balayage (DSC) selon la norme ISO 11357/partie 3/méthode C2, dans la plage de 100 à 130 °C.

5. Film multicouche à base de polypropylène (F) selon l'une des revendications précédentes, dans lequel la couche d'étanchéité comprend au moins 90 % en poids, sur la base du poids total de la couche de scellement, d'une deuxième composition de polypropylène (PC2) comprenant les composants suivants :
a) un deuxième copolymère statistique hétérophasique de propylène-éthylène (RAHECO2), comprenant :
a2) une matrice cristalline (M2) qui est un copolymère statistique de propylène-éthylène ; et
b2) un élastomère amorphe de propylène-éthylène (E2) ;
b) un ou plusieurs copolymères statistiques de propylène-éthylène (R-PP) ;
dans lequel les quantités combinées du deuxième copolymère statistique hétérophasique de propylène-éthylène (RAHECO2) et des un ou plusieurs copolymères statistiques de propylène-éthylène (R-PP) sont d'au moins 90 % en poids, par rapport au poids total de la deuxième composition de polypropylène (PC2).

6. Film multicouche à base de polypropylène (F) selon la revendication 5, dans lequel le deuxième copolymère statistique hétérophasique de propylène-éthylène (RAHECO2) présente une ou plusieurs, de préférence la totalité, des propriétés suivantes :
a) un indice de fluidité à chaud (MFR₂), déterminé selon la norme ISO 1133 à 230 °C et 2,16 kg, dans la plage de 0,1 à 10,0 g/10 min ;
b) une teneur en fraction soluble (SF) dans la plage de 15 à 45 % en poids et une teneur en fraction cristalline (CF) dans la plage de 55 à 85 % en poids, toutes deux déterminées selon l'analyse CRYSTEX QC ;
c) une teneur en éthylène de la fraction soluble (C2(SF)), déterminée par analyse CRYSTEX QC, dans la plage de 17,0 à 45,0 % en poids ;
d) une teneur en éthylène de la fraction cristalline (C2(CF)), déterminée par analyse CRYSTEX QC, dans la plage de 1,0 à 10,0 % en poids ;
e) une viscosité intrinsèque de la fraction soluble (iV(SF)) déterminée par analyse CRYSTEX QC, dans la plage de 1,20 à 3,50 dl/g ;
f) une viscosité intrinsèque de la fraction cristalline (iV(CF)) déterminée par analyse CRYSTEX QC, dans la plage de 1,20 à 4,50 dl/g ; et
g) un rapport de viscosités intrinsèques (iV(SF)/iV(CF)), déterminé par analyse CRYSTEX QC, dans la plage de 0,40 à 2,00 ;
h) une température de fusion (Tm), déterminée par calorimétrie différentielle à balayage (DSC) selon la norme ISO 11357 / partie 3 / méthode C2, dans la plage de 130 à 155 °C ; et
i) une teneur en régiodéfauts 2,1 dans la matrice cristalline (M2), telle que déterminée par spectroscopie RMN ¹³C, dans la plage de 0,00 à 0,20 % en mole.

7. Film multicouche à base de polypropylène (F) selon la revendication 5 ou la revendication 6, dans lequel le premier copolymère hétérophasique de propylène-éthylène (HECO1) est un premier copolymère statistique hétérophasique de propylène-éthylène (RAHECO1) dans lequel la matrice cristalline (M1) est un copolymère statistique de propylène-éthylène et le deuxième copolymère statistique hétérophasique de propylène-éthylène (RAHECO2) est identique au premier copolymère statistique hétérophasique de propylène-éthylène (RAHECO1).

8. Film multicouche à base de polypropylène (F) selon l'une des revendications 5 à 7, dans lequel la deuxième composition de polypropylène (PC2) comprend les composants suivants :
a) le deuxième copolymère statistique hétérophasique de propylène-éthylène (RAHECO2) ;
b) un premier copolymère statistique de propylène-éthylène (R-PP1) présentant une température de cristallisation (Tc), déterminée par calorimétrie différentielle à balayage (DSC) selon la norme ISO 11357 / partie 3 / méthode C2, dans la plage de 110 à 125 °C ; et
c) un deuxième copolymère statistique de propylène-éthylène (R-PP2) présentant une température de cristallisation (Tc), déterminée par calorimétrie différentielle à balayage (DSC) selon la norme ISO 11357 / partie 3 / méthode C2, dans la plage de 85 à 109 °C ;
dans lequel les quantités combinées du deuxième copolymère statistique hétérophasique de propylène-éthylène (RAHECO2), du premier copolymère statistique de propylène-éthylène (R-PP1) et du deuxième copolymère statistique de propylène-éthylène (R-PP2) sont d'au moins 90 % en poids, par rapport au poids total de la deuxième composition de polypropylène (PC2).

9. Film multicouche à base de polypropylène (F) selon la revendication 8, dans lequel le premier copolymère statistique de propylène-éthylène (R-PP1) présente une ou plusieurs, de préférence la totalité, des propriétés suivantes :
a) un indice de fluidité à chaud (MFR₂) déterminé selon la norme ISO 1133 à 230 °C et 2,16 kg, dans la plage de 1,0 à 5,0 g/10 min ;
b) une teneur en éthylène (C2), déterminée par spectroscopie RMN ¹³C quantitative, dans la plage de 1,0 à 10,0 % en poids ;
c) une teneur en fraction soluble à froid dans le xylène (XCS), déterminée selon l'analyse ISO 16152, dans la plage de 1,0 à 15,0 % en poids ;
d) une température de fusion (Tm), déterminée par calorimétrie différentielle à balayage (DSC) selon la norme ISO 11357 / partie 3 / méthode C2, dans la plage de 130 à 150 °C ;
e) une teneur en régiodéfauts 2,1, telle que déterminée par spectroscopie RMN ¹³C, dans la plage de 0,00 à 0,20 % en mole.

10. Film multicouche à base de polypropylène (F) selon la revendication 8 ou la revendication 9, dans lequel le deuxième copolymère statistique de propylène-éthylène (R-PP2) présente :
a) un indice de fluidité à chaud (MFR₂), déterminé selon la norme ISO 1133 à 230 °C et 2,16 kg, dans la plage de 5,5 à 20,0 g/10 min ;
b) une teneur en éthylène (C2), déterminée par spectroscopie RMN ¹³C quantitative, dans la plage de 1,0 à 10,0 % en poids ;
c) une teneur en fraction soluble à froid dans le xylène (XCS), déterminée selon l'analyse ISO 16152, dans la plage de 1,0 à 15,0 % en poids ;
d) une température de fusion (Tm), déterminée par calorimétrie différentielle à balayage (DSC) selon la norme ISO 11357 / partie 3 / méthode C2, dans la plage de 130 à 150 °C ; et
e) une teneur en régiodéfauts 2,1, telle que déterminée par spectroscopie RMN ¹³C, dans la plage de 0,00 à 0,20 % en mole.

11. Film multicouche à base de polypropylène (F) selon l'une des revendications 5 à 10, dans lequel la deuxième composition de polypropylène (PC2) comprend :
a) de 20 à 70 % en poids, par rapport au poids total de la deuxième composition de polypropylène (PC2), du deuxième copolymère statistique hétérophasique de propylène-éthylène (RAHECO2) ;
b) de 30 à 80 % en poids, par rapport au poids total de la deuxième composition de polypropylène (PC2), des un ou plusieurs copolymères statistiques de propylène-éthylène (R-PP),
de manière davantage préférée, la deuxième composition de polypropylène (PC2) comprend :
a) de 20 à 70 % en poids, par rapport au poids total de la deuxième composition de polypropylène (PC2), du deuxième copolymère statistique hétérophasique de propylène-éthylène (RAHECO2) ;
b) de 10 à 50 % en poids, par rapport au poids total de la deuxième composition de polypropylène (PC2), du premier copolymère statistique de propylène-éthylène (R-PP1) tel que défini selon la revendication 8 ou la revendication 9 ; et
c) de 10 à 50 % en poids, par rapport au poids total de la deuxième composition de polypropylène (PC2), du deuxième copolymère statistique de propylène-éthylène (R-PP2) tel que défini selon la revendication 8 ou la revendication 10.

12. Film multicouche à base de polypropylène (F) selon l'une des revendications précédentes, dans lequel la couche de peau comprend au moins 90 % en poids d'un troisième copolymère statistique de propylène-éthylène (R-PP3), présentant une ou plusieurs, de préférence la totalité, des propriétés suivantes :
a) un indice de fluidité à chaud (MFR₂), déterminé selon la norme ISO 1133 à 230 °C et 2,16 kg, dans la plage de 1,0 à 10,0 g/10 min ;
b) une teneur en éthylène (C2), déterminée par spectroscopie RMN ¹³C quantitative, dans la plage de 1,0 à 10,0 % en poids ;
c) une teneur en fraction soluble à froid dans le xylène (XCS), déterminée selon l'analyse ISO 16152, dans la plage de 1,0 à 15,0 % en poids ;
d) une température de fusion (Tm), déterminée par calorimétrie différentielle à balayage (DSC) selon la norme ISO 11357 / partie 3 / méthode C2, dans la plage de 130 à 150 °C ;
e) une température de cristallisation (Tc), déterminée par calorimétrie différentielle à balayage (DSC) selon la norme ISO 11357 / partie 3 /méthode C2, dans la plage de 85 à 105 °C ; et
f) une teneur en régiodéfauts 2,1, telle que déterminée par spectroscopie RMN ¹³C, dans la plage de 0,00 à 0,20 % en mole.

13. Film multicouche à base de polypropylène (F) selon l'une des revendications précédentes, dans lequel la couche de peau comprend une quantité dans la plage de 1 à 10 % en poids, par rapport au poids total de la couche de peau, d'un polypropylène à modification polaire (PMP), dans lequel le polypropylène à modification polaire est de préférence un polypropylène greffé à l'anhydride maléique (MAH-PP) présentant :
a) un indice de fluidité à chaud (MFR₂), déterminé selon la norme ISO 1133 à 230 °C et à 2,16 kg, dans la plage de 50 à 250 g/10 min ; et/ou
b) une teneur en anhydride maléique (MAH), déterminée selon une analyse spectroscopique FT-IR, dans la plage de 0,1 à 5,0 % en poids.

14. Film multicouche à base de polypropylène (F) selon l'une des revendications précédentes, présentant une épaisseur dans la plage de 20 à 250 µm, de préférence dans lequel :
a) la couche de peau présente une épaisseur dans la plage de 8 à 30 % de l'épaisseur totale du film multicouche (F) ;
b) la couche centrale présente une épaisseur dans la plage de 40 à 84 % de l'épaisseur totale du film multicouche (F) ; et
c) la couche de scellement présente une épaisseur dans la plage de 8 à 30 % de l'épaisseur totale du film multicouche (F).

15. Film multicouche à base de polypropylène (F) selon l'une des revendications précédentes, présentant :
a) une résistance au scellage dans le sens machine, déterminée selon le procédé spécifié dans les procédés de mesure à une température de scellage de 120 °C, dans la plage de 6 à 30 N ; et/ou
b) une résistance au scellage dans le sens machine, déterminée selon le procédé spécifié dans les procédés de mesure à une température de scellage de 120 °C, dans la plage de 12 à 30 N.
